# EUROPEAN PATENT SPECIFICATION

(11) **EP 3 401 573 B1**
(45) Date of publication and mention of the grant of the patent: **25.11.2020**
(21) Application number: 17753221.5
(22) Date of filing: 15.02.2017
(51) Int. Cl.: F16H 55/22, F16H 1/16, F16H 55/06

(54) **WORM WHEEL AND WORM REDUCER**
SCHNECKENRAD UND SCHNECKENREDUZIERGETRIEBE
ROUE TANGENTE ET RÉDUCTEUR À VIS SANS FIN

(30) Priority: 16.02.2016 JP 2016026543; 18.10.2016 JP 2016204201
(43) Date of publication of application: 14.11.2018
(73) Proprietor: NSK Ltd., Tokyo 141-8560 (JP)
(72) Inventor: KIYOTA, Haruhiko, Maebashi-shi Gunma 371-8527 (JP); YAMAMOTO, Takeshi, Maebashi-shi Gunma 371-8527 (JP); YASUDA, Kaname, Maebashi-shi Gunma 371-8527 (JP); ARAI, Tomohiro, Maebashi-shi Gunma 371-0853 (JP); TAKANO, Junichi, Maebashi-shi Gunma 371-0853 (JP); HOTTA, Kazuki, Maebashi-shi Gunma 371-0853 (JP)
(74) Representative: Mewburn Ellis LLP
(86) International application number: PCT/JP2017/005521
(87) International publication number: WO 2017/141965

(56) References cited:
- JP-A- 2000 329 217
- JP-A- 2010 014 253
- JP-A- 2010 014 253
- JP-A- 2013 241 953
- JP-A- 2014 137 114
- JP-A- 2015 136 872
- US-A1- 2001 039 730

## Description

### TECHNICAL FIELD

The present invention relates to a worm wheel that is formed by combining a metal part and a synthetic resin part, and a worm reduction gear including the worm wheel.

### BACKGROUND ART

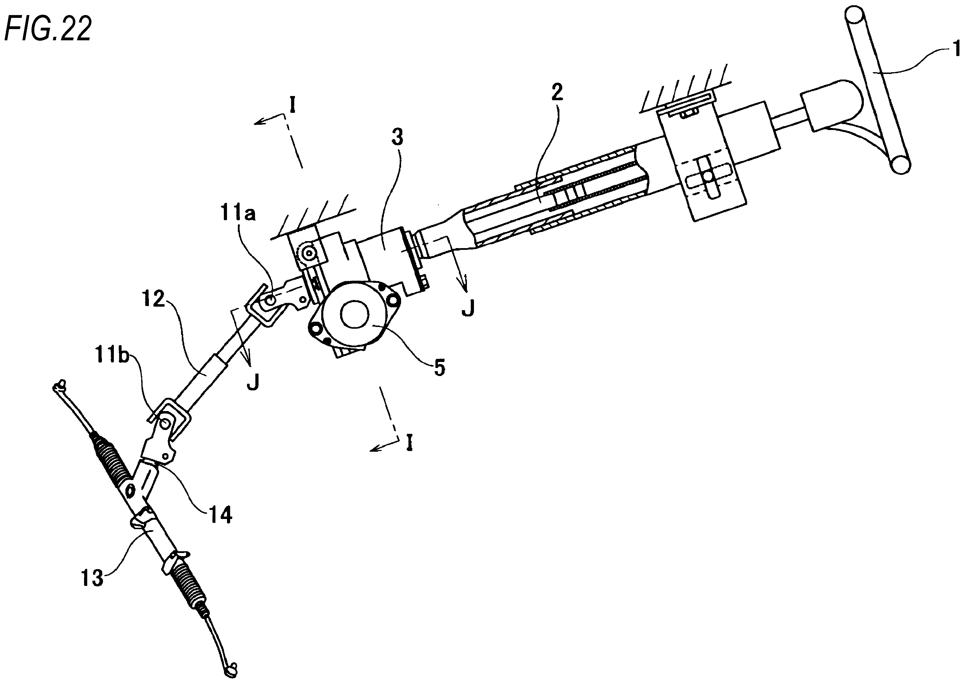

Figs. 22 to 27 illustrate one example of an electric power steering device of the related art described in Patent Document 1 and the like. A front end of a steering shaft 2 attached with a steering wheel 1 to a rear end thereof is rotatably supported in a housing 3. Thus, a worm wheel 4 is fixed to a part driven rotationally by the steering shaft 2. Incidentally, a worm shaft 6 is connected to an output shaft of the electric motor 5. Further, a worm tooth part 18 provided on an outer circumferential surface of an axial intermediate part of the worm shaft 6 is engaged with a worm wheel tooth part 19 (teeth 20 and 20) provided on the outer circumferential surface of the worm wheel 4, so that a predetermined magnitude of auxiliary torque (auxiliary power) can be applied to the worm wheel 4 from the electric motor 5 in a predetermined direction.

The worm wheel 4 is externally fitted and fixed to an axial intermediate part of the output shaft 7 that serves as an output part of the auxiliary torque, and is rotated together with the output shaft 7. The output shaft 7 is coupled with the front end of the steering shaft 2 through a torsion bar 9 in the housing 3 in a state where a part near both ends of the axial intermediate part is supported to be rotatable only by one pair of rolling bearings 8a and 8b. The electric motor 5 rotationally drives the worm shaft 6 according to a direction and a magnitude of a steering torque that is detected by a torque sensor 10 and is applied from the steering wheel 1 to the steering shaft 2, and the auxiliary torque is applied to the output shaft 7. The rotation of the output shaft 7 is transmitted to a pinion shaft 14 which serves as an input part of a steering gear unit 13 through a pair of universal joints 11a and 11b and an intermediate shaft 12, so that a desired steering angle is given to the steering wheel.

In the case of the illustrated example, the worm wheel 4 is formed by combining a metal inner wheel element 15 serving as a core and a synthetic resin outer wheel element 16 serving as a tooth-part forming body. That is, in the worm wheel 4, the part which is externally fitted and fixed to the output shaft 7 serves as the metal inner wheel element 15 having a ring shape, and the part including the worm wheel tooth part 19 serves as the synthetic resin outer wheel element 16. Further, as described above, the outer wheel element 16 is made of a synthetic resin, so as to facilitate an operation (cost reduction) that forms the worm wheel tooth part 19 on the outer circumferential surface of the worm wheel 4, and to reduce a tooth hitting noise generated in the engaging part between the worm tooth part 18 of the worm shaft 6 and the worm wheel tooth part 19 of the worm wheel 4.

The outer wheel element 16 made of a synthetic resin surrounds a radially outer end of the inner wheel element 15 over the entire circumference through injection molding (insert molding). In the outer circumferential surface of the inner wheel element 15, a (external-tooth-gear shaped) concave-convex part 17 in a circumferential direction is provided, and a part of a synthetic resin configuring the outer wheel element 16 enters into a plurality of concave parts configuring the concave-convex part 17, to improve a holding power of the outer wheel element 16 in a rotating direction with respect to the inner wheel element 15.

In the case of the above-described structure of the related art, there is room for improvement from the viewpoint of reducing the weight of the worm wheel 4.

That is, in the case of the above-described structure of the related art, since the entire inner wheel element 15 is made of metal, the weight of the worm wheel 4 tends to be large.

### RELATED ART REFERENCE

### PATENT DOCUMENT

Patent Document 1: WO 2013/084613

JP2010-014253 discloses one configuration of a worm wheel for an electric power steering device. JP2014-137114 discloses another configuration of a worm wheel for electric power steering apparatus.

### SUMMARY OF THE INVENTION

### PROBLEMS TO BE SOLVED BY THE INVENTION

The invention has been made in consideration of the above-described situation, and an object thereof is to realize a structure for achieving weight reduction in a worm wheel formed by combining a metal part and a synthetic resin part.

### MEANS FOR SOLVING THE PROBLEMS

A worm wheel of the present invention includes an inner wheel element and an outer wheel element.

The inner wheel element includes a metal core made of metal and formed in an annular shape, and a resin core made of a synthetic resin and formed in an annular shape to surround an outer circumference of the metal core.

The outer wheel element is made of a synthetic resin and formed in an annular shape, and surrounds an outer circumference of the resin core, and includes a worm wheel tooth part on an outer circumferential surface.

In the worm wheel of the invention, the dimension of an inner diameter of the outer wheel element is smaller than the dimension of an outer diameter of the metal core.

In the worm wheel of the invention, for example, the metal core may include a metal annular part, and a metal flange part extending radially outwards from an axial part of an outer circumferential surface of the metal annular part. Further, the resin core may surround the metal flange part.

In the worm wheel of the invention, for example, cutout parts (for example, notches opening at the outer circumferential edge of the metal flange part, through holes passing axially through the metal flange part, concave parts opening at the axial side surface of the metal flange part) may be provided at one or more positions in a circumferential direction of the metal flange part. A portion of the synthetic resin forming the resin core may enter into the cutout parts.

Further, in this case, for example, a projecting part projecting in an axial direction may be provided on an axial side surface of the metal flange part to be adjacent to at least one of the cutout parts.

In the worm wheel of the invention, for example, a metal concave-convex part may be circumferentially provided on the outer circumferential surface of the metal annular part. The portion of the synthetic resin forming the resin core may enter into a concave part configuring the metal concave-convex part.

In the worm wheel of the invention, for example, an annular concave part may be provided to be recessed in the axial direction over an entire circumference at a part located radially inside from an outer circumferential edge in an axial side surface of the resin core, and the portion of the synthetic resin configuring the outer wheel element may enter into the annular concave part. The annular concave part may be provided, for example, on a radial intermediate part of the axial side surface of the resin core, or on the radial intermediate part or inner end of the axial side surface of the resin core.

In the worm wheel of the invention, for example, a resin concave-convex part may be circumferentially formed on a surface of the resin core, and the portion of the synthetic resin configuring the outer wheel element may enters into a concave part configuring the resin concave-convex part.

In this case, for example, the resin concave-convex part may be formed on the outer circumferential surface of the resin core or the inner surface of the annular concave part {at least a part of the outer diameter side circumferential surface, the inner diameter side circumferential surface, and the bottom surface (axial side surface) constituting the inner surface}.

In the worm wheel of the invention, if the resin concave-convex part is formed on the outer diameter side circumferential surface or the inner diameter side circumferential surface constituting the inner surface of the annular concave part, for example, the resin concave-convex part may be formed throughout an entire axial length of the outer diameter side circumferential surface or the inner diameter side circumferential surface constituting the inner surface of the annular concave part, and the portion of the synthetic resin forming the outer wheel element may enter into the concave part configuring the resin concave-convex part.

In the invention, for example, a plurality of concave parts and convex parts configuring the resin concave-convex part may be formed to be parallel to the axial direction of the worm wheel.

Alternatively, for example, a plurality of teeth configuring the worm wheel tooth part may be formed to be tilted in a predetermined direction relative to the axial direction of the worm wheel, and a plurality of concave parts and convex parts configuring the resin concave-convex part may be formed to be tilted in a direction opposite to the predetermined direction relative to the axial direction of the worm wheel.

In the worm wheel of the invention, for example, an axial range of at least a part of the outer circumferential surface of the resin core may serve as a cylindrical surface part.

In this case, for example, the diameters of a tip circle and a root circle of a part radially overlapping with the cylindrical surface part that is at least the outer circumferential surface of the inner wheel element in the worm wheel tooth part may not be changed in the axial direction.

In the worm wheel of the invention, if the entire outer circumferential surface of the resin core serves as the cylindrical surface part, for example, the radial outer ends of both axial sides of the inner wheel element, which are continuous parts (directly or via a chamfered part) with respect to both axial end edges of the cylindrical surface part which is the outer circumferential surface of the inner wheel element may be formed as flat surface parts perpendicular to the central axis of the inner wheel element, respectively. Thereby, it is possible to give each axial end edge of the cylindrical surface part which is the outer circumferential surface of the inner wheel element a circular shape in which an axial position is not changed in the circumferential direction.

In the worm wheel of the invention, for example, at least a part (for example, the cylindrical surface part, the entire surface of the resin core) covered with the synthetic resin forming the outer wheel element in the surface of the resin core, may be a minute concave-convex surface formed by various processes such as knurling, graining (process for transferring minute concave-convex formed on the surface of hard metal to the surface of a molded product) and shot blasting.

By adopting this configuration, the portion of the synthetic resin forming the outer wheel element enters into the concave part configuring the minute concave-convex surface, so that the holding power (adhesiveness) of the outer wheel element to the resin core can be increased.

It is preferable that the depth of the concave part configuring the minute concave-convex surface is set to 1/10 or less (preferably 1/20 or less, more preferably 1/30 or less) of the radial height of the teeth configuring the worm wheel tooth part so that it does not affect the volume of the synthetic resin forming the outer wheel element.

A worm reduction gear of the present invention may include a housing, a rotation shaft, a worm wheel, and a worm shaft.

The rotation shaft may be rotatably supported on the housing.

Further, a worm wheel may have on an outer circumferential surface a worm wheel tooth part, and may be externally fitted and fixed to the rotation shaft.

The worm shaft may have on an axial intermediate part of an outer circumferential surface a worm tooth part, and may be supported to be rotatable relative to the housing, in a state where the worm tooth part may be engaged with the worm wheel tooth part.

Particularly, in the worm reduction gear of the invention, the worm wheel may adopt the worm wheel of the invention.

In the worm reduction gear of the invention, for example, an axial range radially overlapping with at least an axial part (for example, axial intermediate part or axial end) of an engaging part between the worm wheel tooth part and the worm tooth part in an outer circumferential surface of the resin core configuring the worm wheel may serve as a cylindrical surface part.

In this case, an axial range radially overlapping with the entire engaging part in the outer circumferential surface of the resin core may serve as a cylindrical surface part.

Further, in this case, for example, the entire outer circumferential surface of the resin core may serve as the cylindrical surface part (excluding a chamfered part in the case where the chamfered part is provided on an axial end edge of the circumferential surface).

### ADVANTAGES OF THE INVENTION

In a worm wheel and a worm reduction gear of the invention configured as described above, an inner wheel element is constituted by a metal core which is made of metal and formed in an annular shape, and a resin core which is made of a synthetic resin and formed in an annular shape, and surrounds an outer circumference of the metal core. Therefore, as compared to the structure of the related art in which the entire inner wheel element is made of metal, the weight of the worm wheel can be reduced.

### BRIEF DESCRIPTION OF THE DRAWINGS

Fig. 1 is a sectional view similar with Figs. 2 and 4 according to the first embodiment of the present invention.

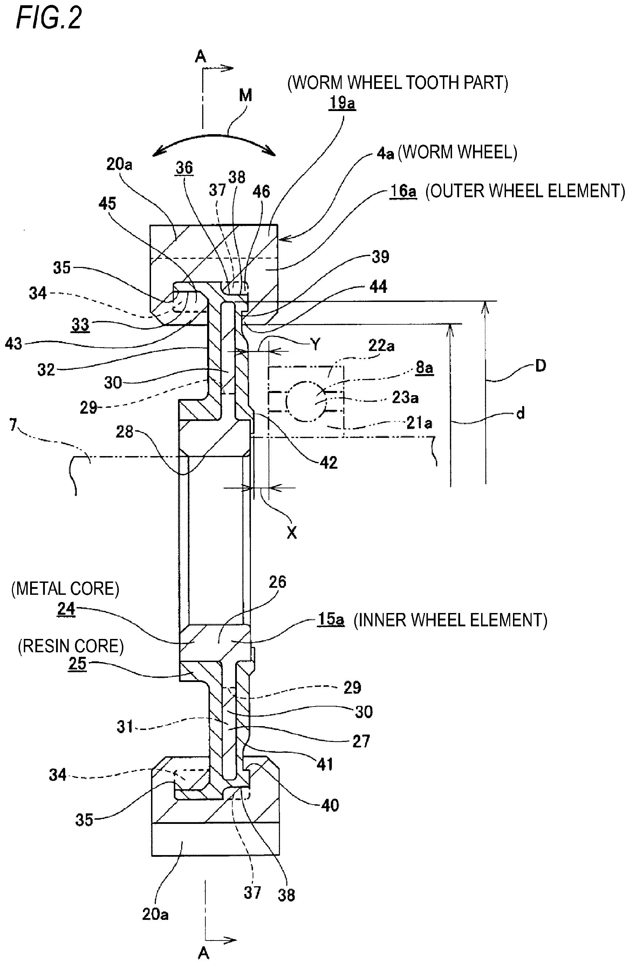

Fig. 2 is a sectional view of a worm wheel according to the first embodiment.

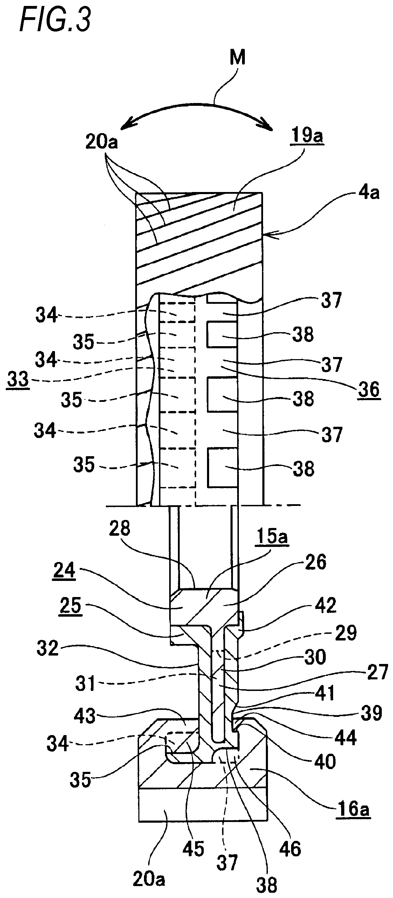

Fig. 3 is a half-sectional view of the worm wheel according to the first embodiment when partially cut away.

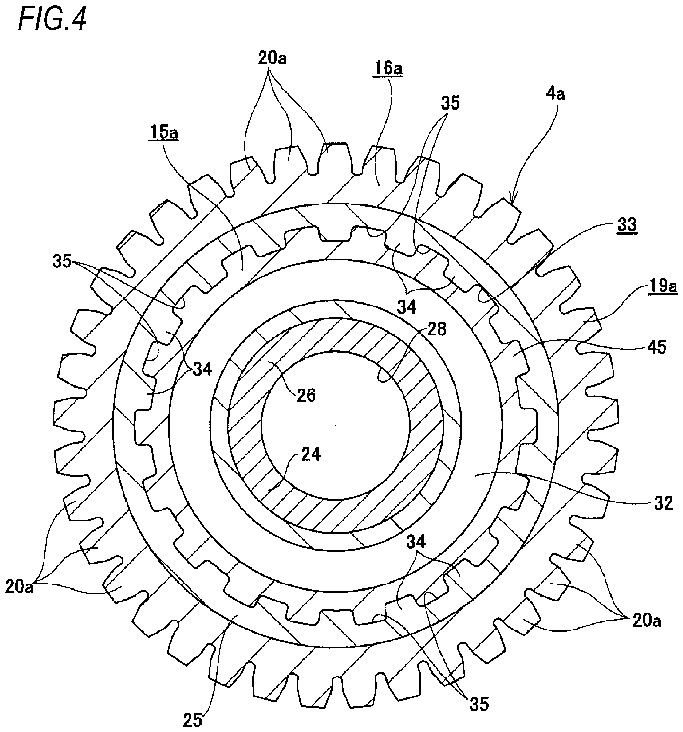

Fig. 4 is a sectional view taken along line A-A of Fig. 2 according to the first embodiment.

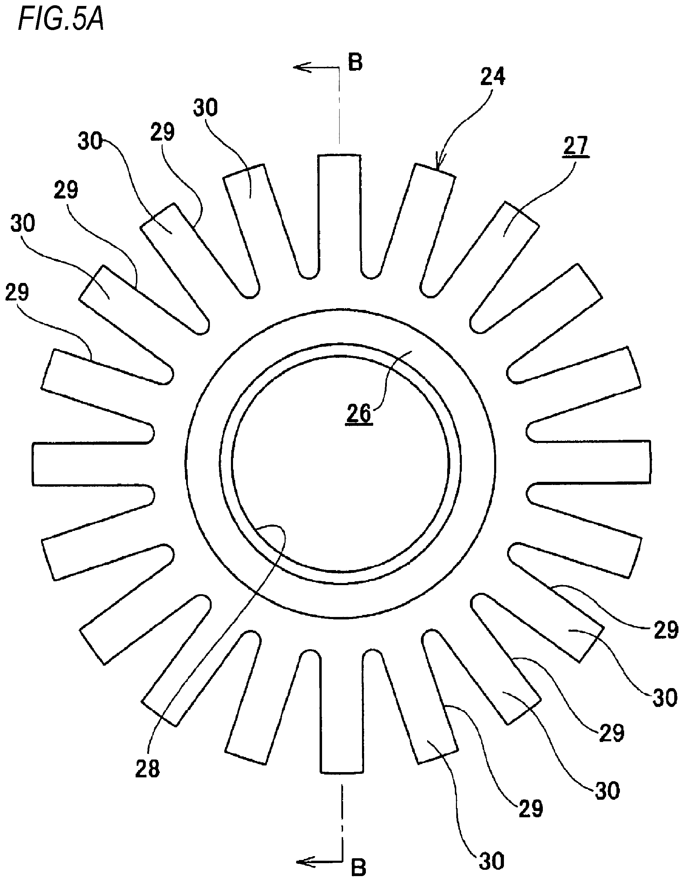

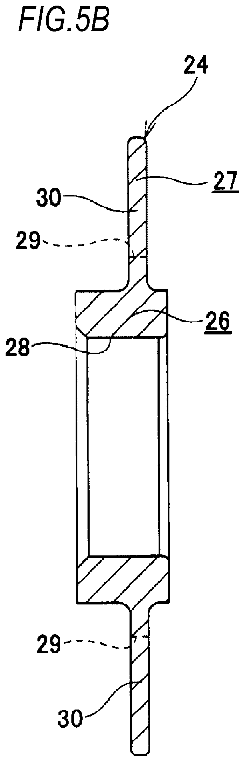

Figs. 5A and 5B are a view seen in an axial direction and a sectional view taken along line B-B of Fig. 5A, respectively, to illustrate a metal core configuring the worm wheel according to the first embodiment.

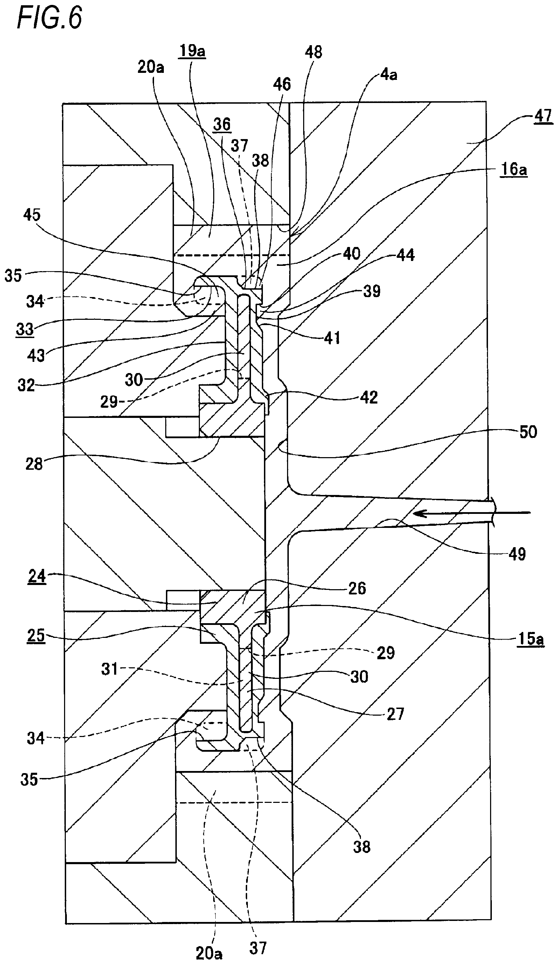

Fig. 6 is a sectional view illustrating a state where an outer wheel element is injection molded according to the first embodiment.

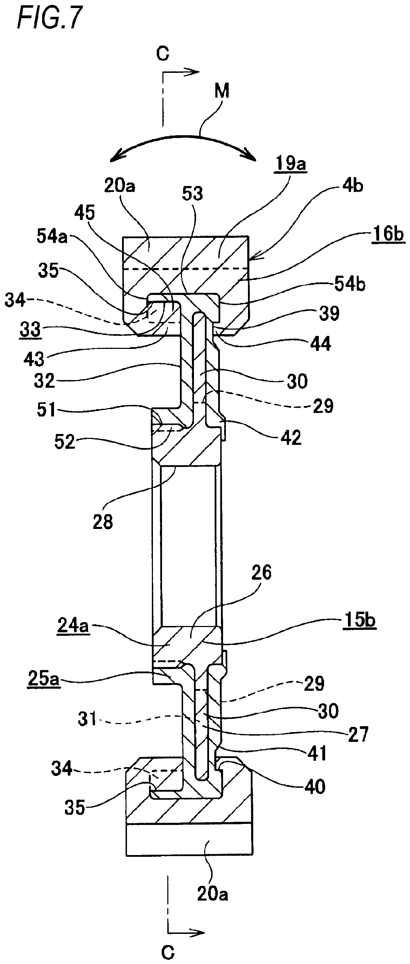

Fig. 7 is a sectional view of a worm wheel according to a second embodiment of the invention.

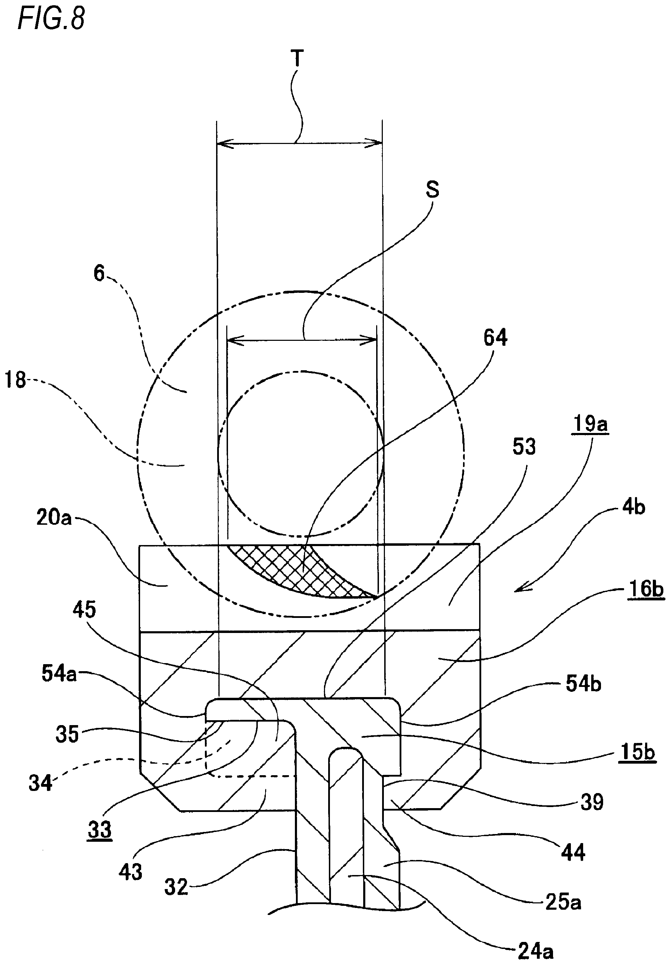

Fig. 8 is a partial sectional view showing a state in which a worm tooth part and a worm wheel tooth part are engaged with each other according to the second embodiment.

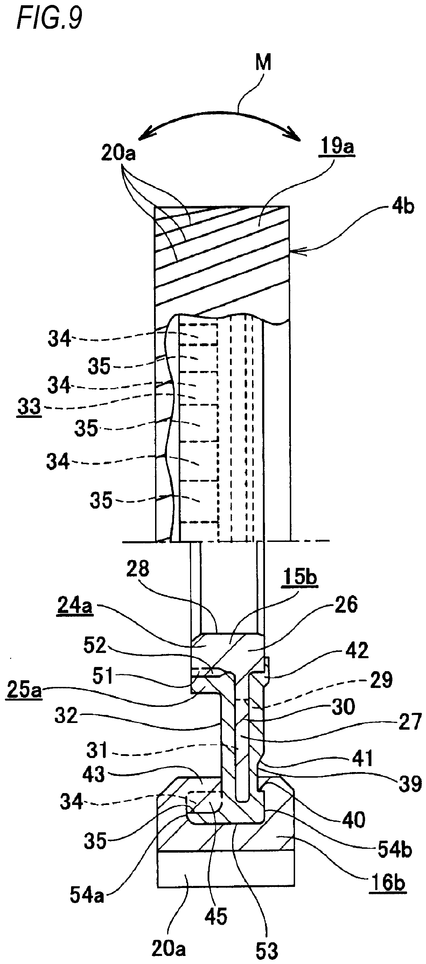

Fig. 9 is a half-sectional view of the worm wheel according to the second embodiment when partially cut away.

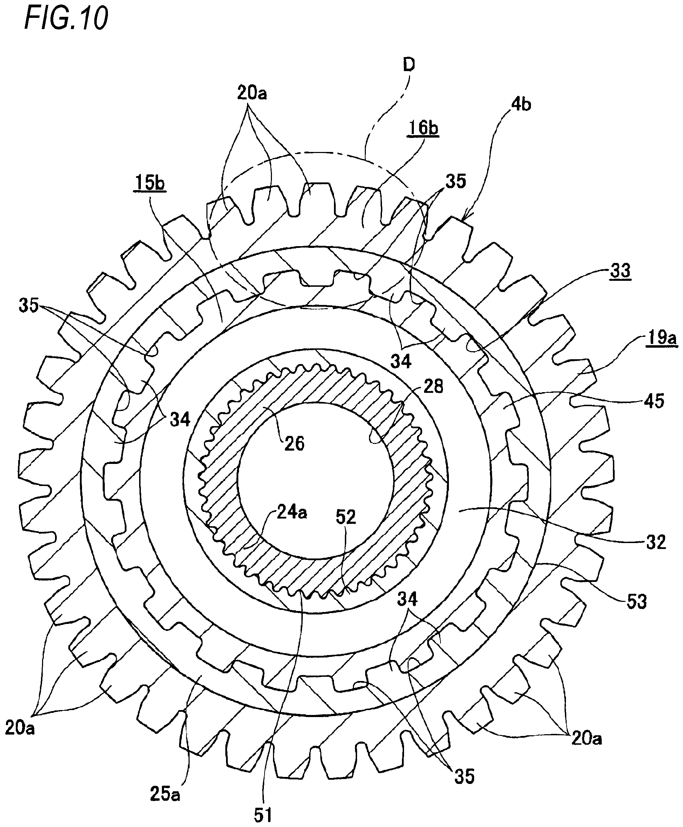

Fig. 10 is a sectional view taken along line C-C of Fig. 7, according to the second embodiment.

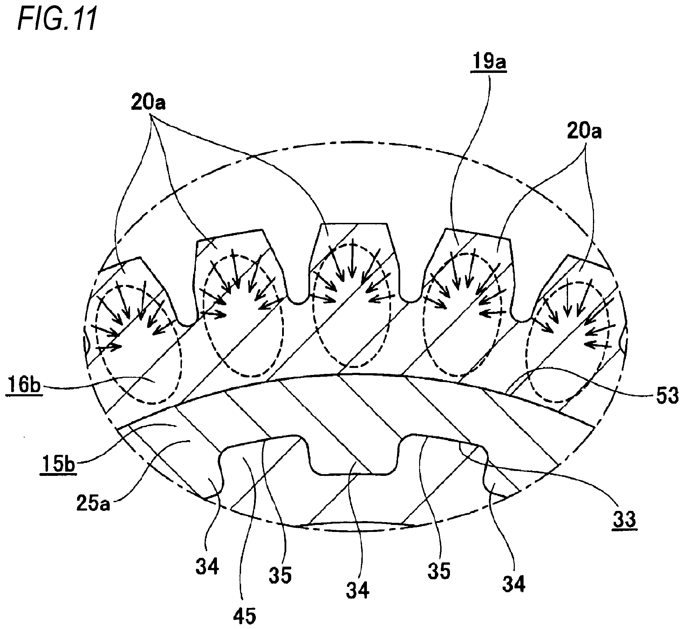

Fig. 11 is an enlarged view of part D of Fig. 10 according to the second embodiment.

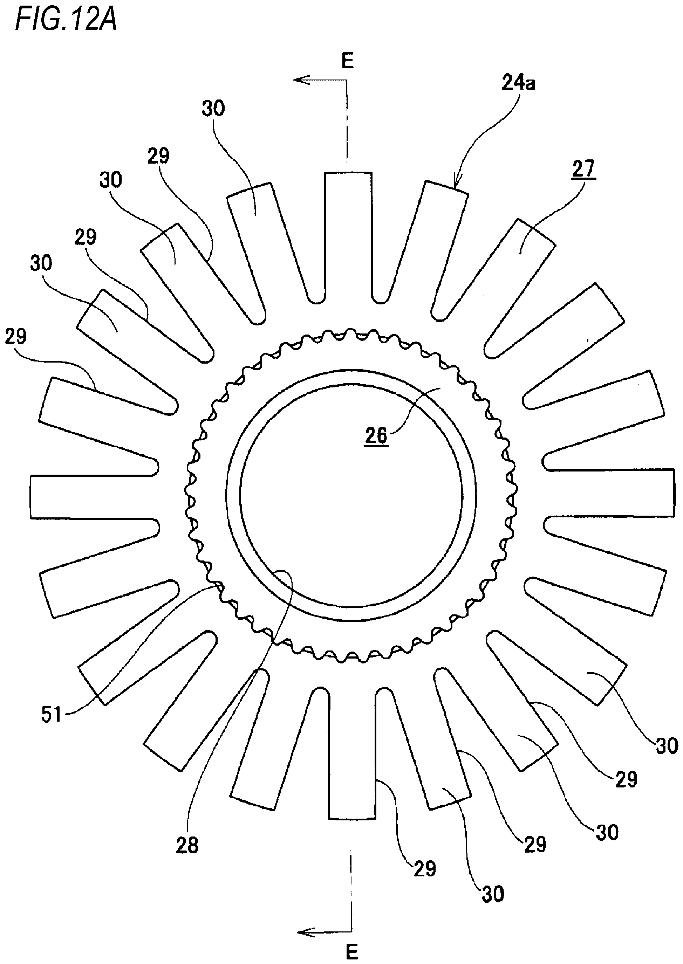

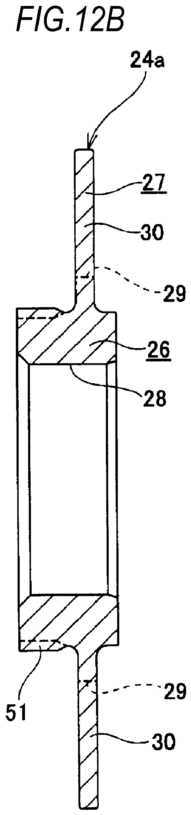

Figs. 12A and 12B are a view seen in an axial direction and a sectional view taken along line E-E of Fig. 12A, respectively, to illustrate a metal core configuring the worm wheel according to the second embodiment.

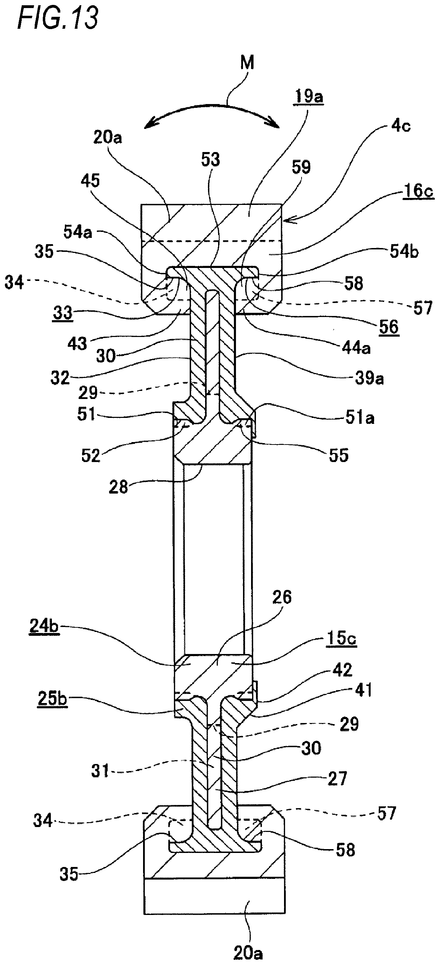

Fig. 13 is a sectional view of a worm wheel according to a third embodiment of the invention.

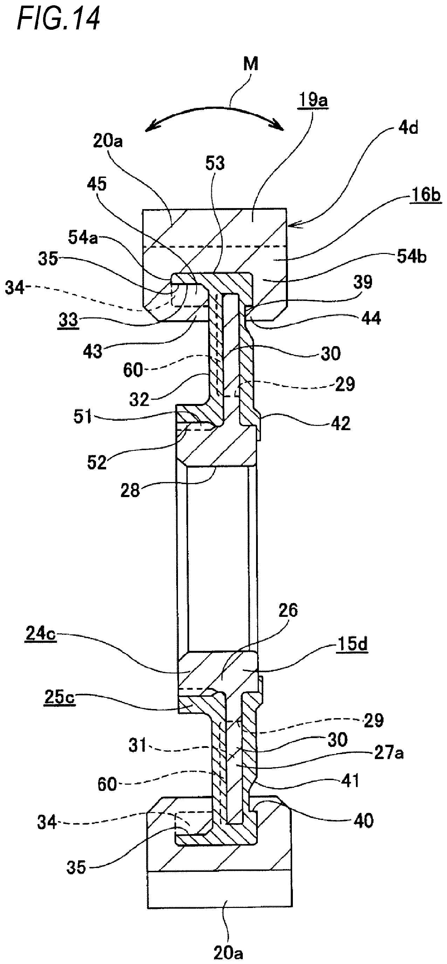

Fig. 14 is a sectional view of a worm wheel according to a fourth embodiment of the invention.

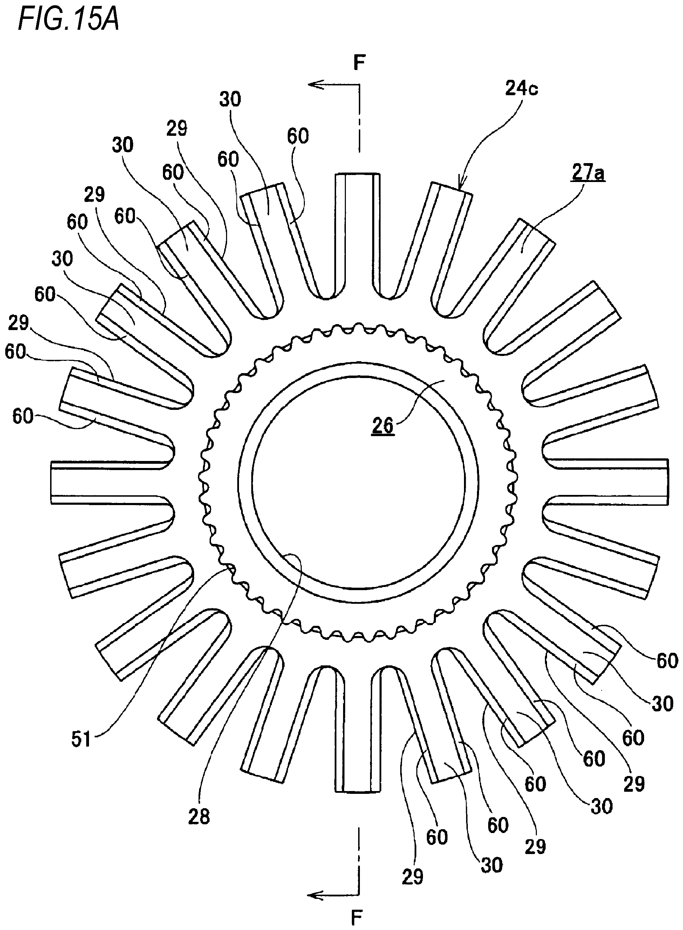

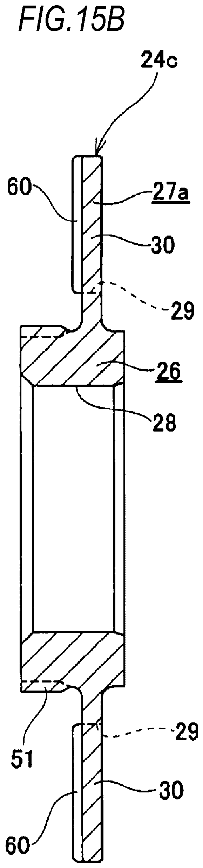

Figs. 15A and 15B are a view seen in an axial direction and a sectional view taken along line F-F of Fig. 15A, respectively, to illustrate a metal core configuring the worm wheel according to the fourth embodiment.

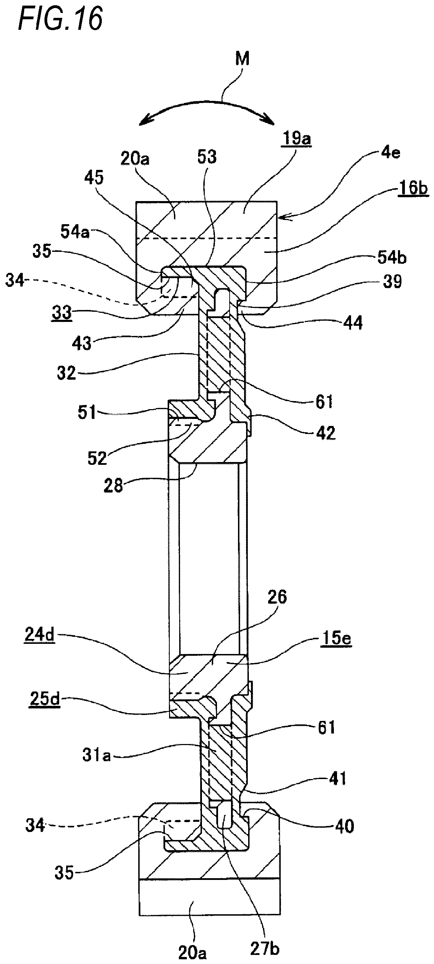

Fig. 16 is a sectional view of a worm wheel according to a fifth embodiment of the invention.

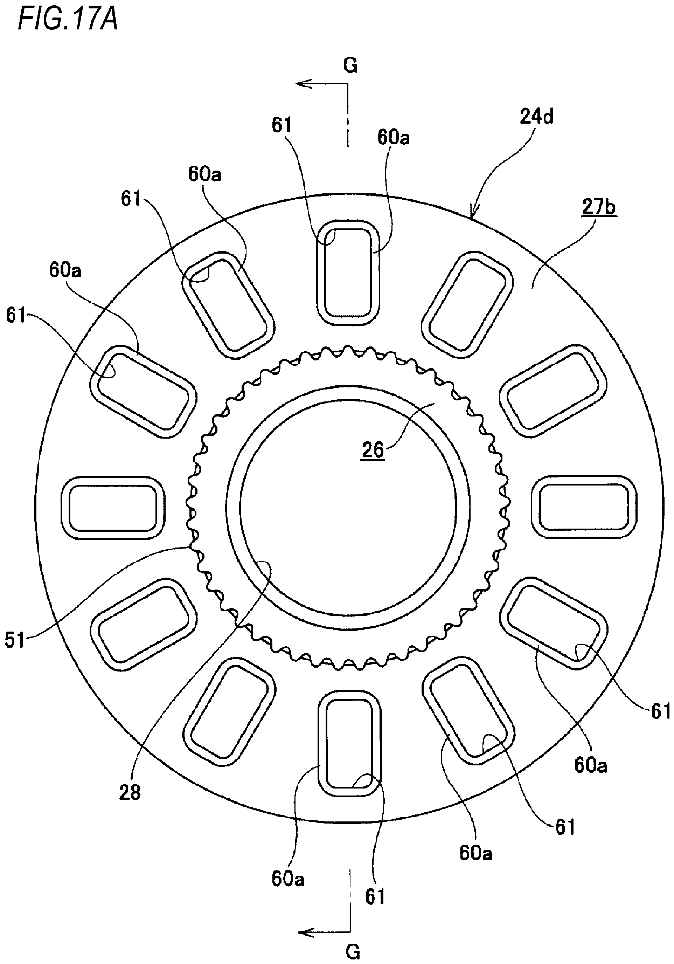

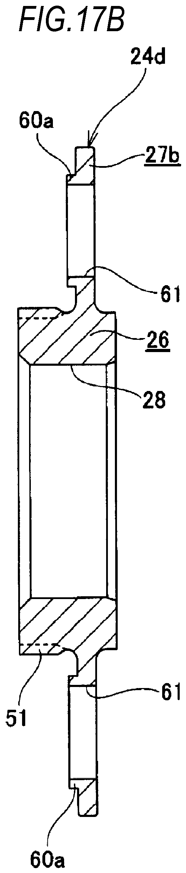

Figs. 17A and 17B are a view seen in an axial direction and a sectional view taken along line G-G of Fig. 17A, respectively, to illustrate a metal core configuring the worm wheel according to the fifth embodiment.

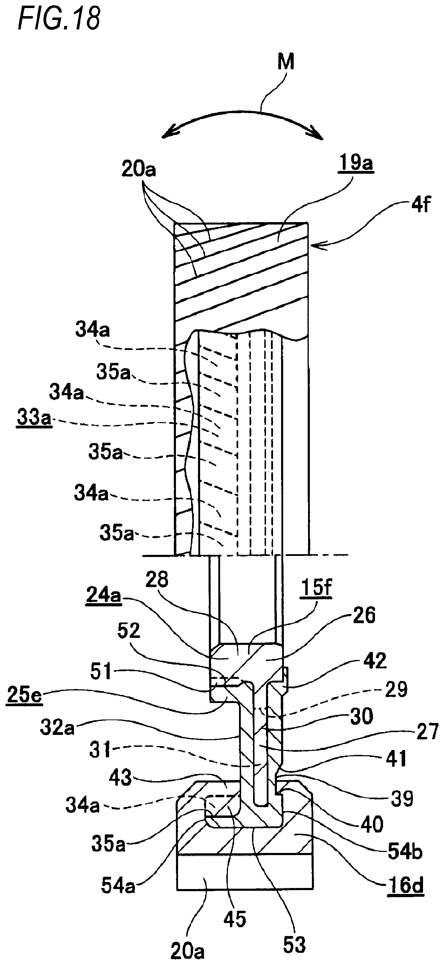

Fig. 18 is a half-sectional view of a worm wheel according to the sixth embodiment of the invention when partially cut away.

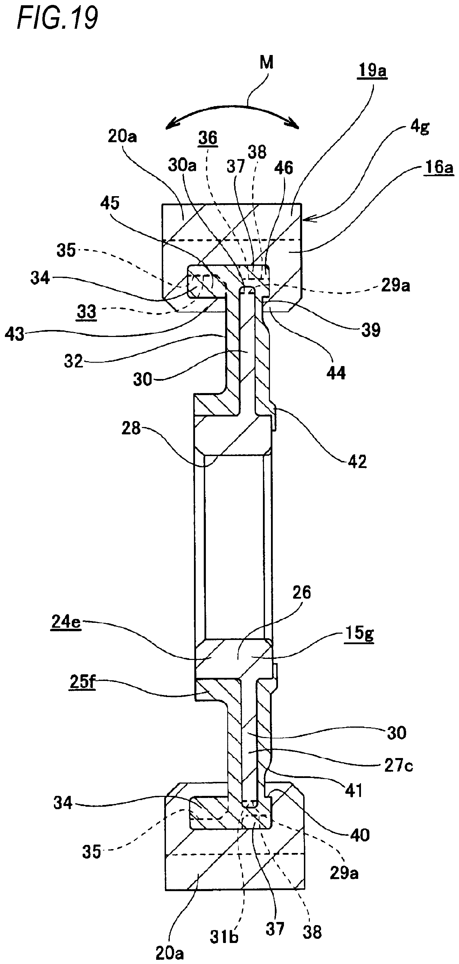

Fig. 19 is a sectional view of a worm wheel according to a seventh embodiment of the invention.

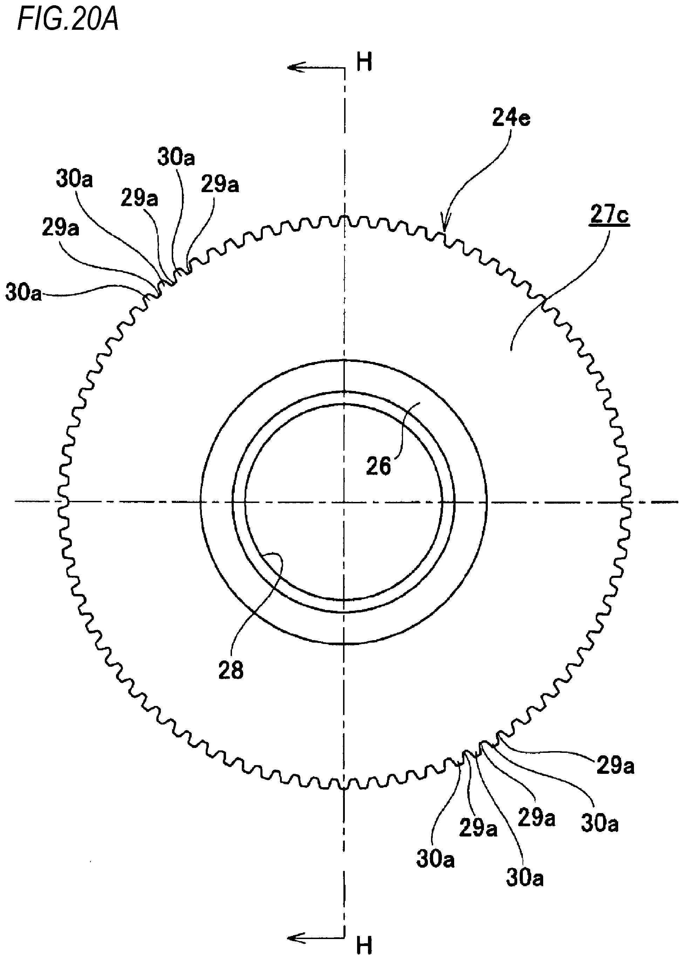

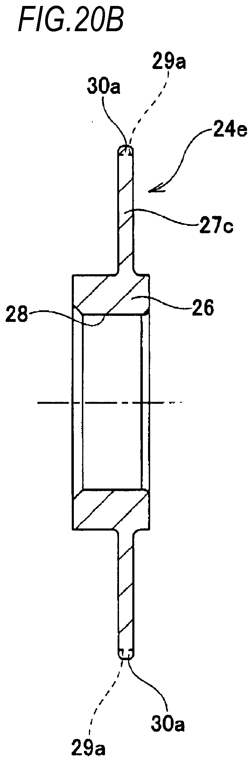

Figs. 20A and 20B are a view seen in an axial direction and a sectional view taken along line H-H of Fig. 20A, respectively, to illustrate a metal core configuring the worm wheel according to the seventh embodiment.

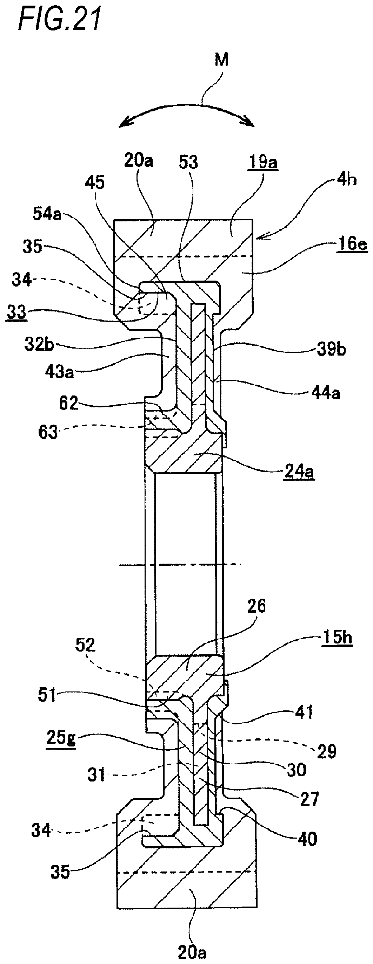

Fig. 21 is a sectional view of a worm wheel according to an eighth embodiment of the invention.
Fig. 22 is a side view illustrating an example of an electric power steering device of the related art when partially cut away.

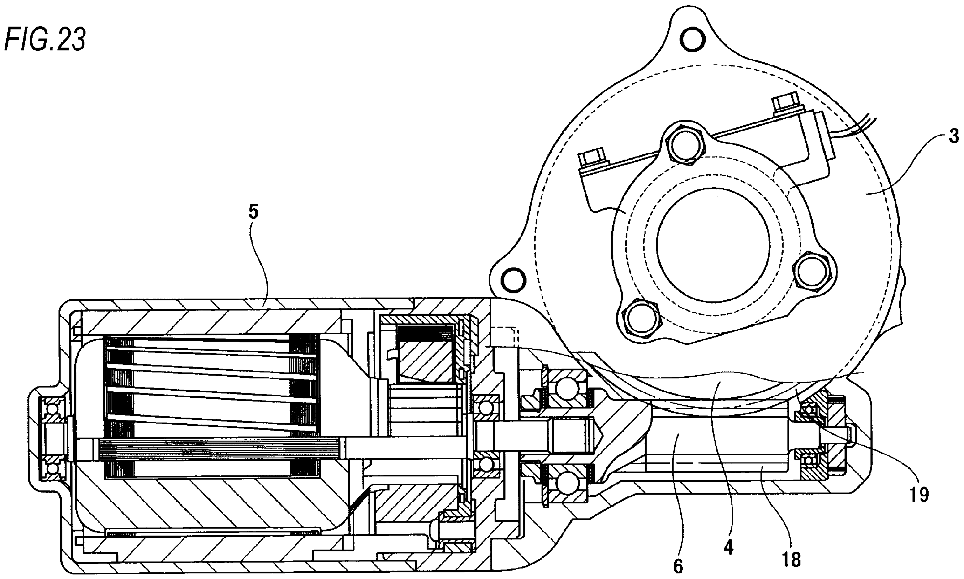

Fig. 23 is an enlarged sectional view taken along line I-I of Fig. 22.

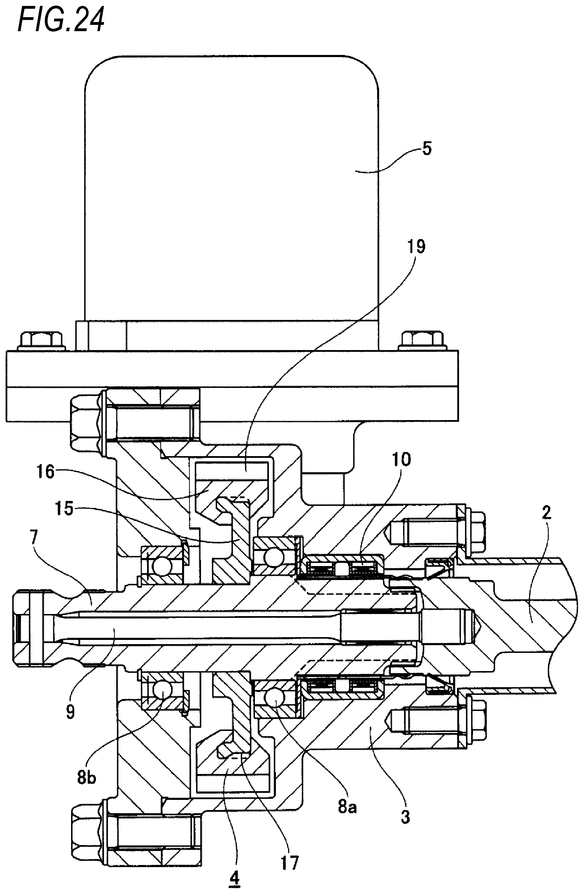

Fig. 24 is an enlarged sectional view taken along line J-J of Fig. 22.

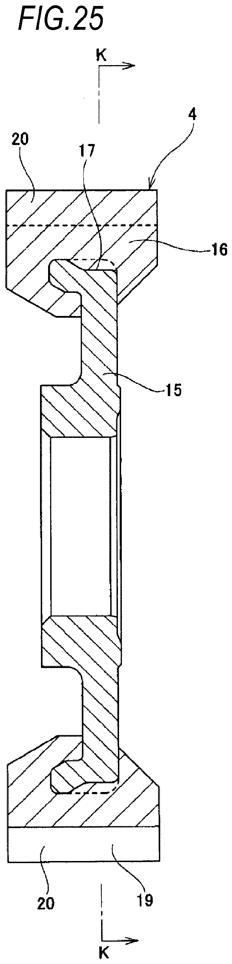

Fig. 25 is a sectional view of a worm wheel.

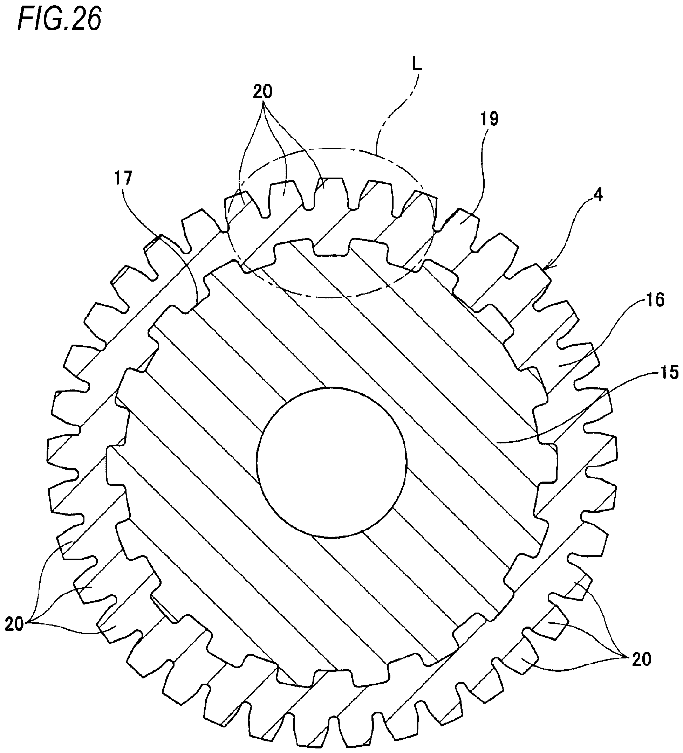

Fig. 26 is a sectional view taken along line K-K of Fig. 25.

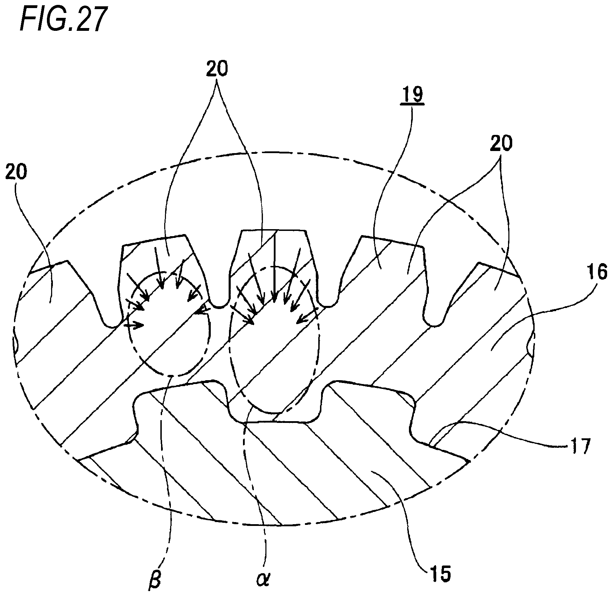

Fig. 27 is an enlarged view of part L of Fig. 26.

### MODES FOR CARRYING OUT THE INVENTION

### [First Embodiment]

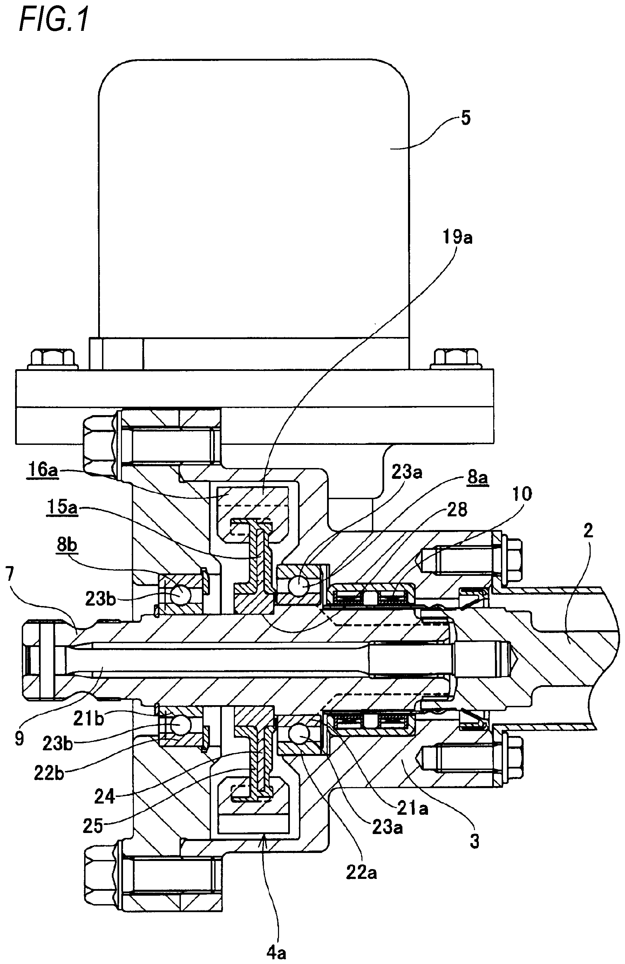

A first embodiment of the invention will be described with reference to Figs. 1 to 6.

In the following description of the present embodiment, "one side" with respect to the axial direction refers to the left side of Figs. 1 to 3, 5B, and 6, while the "other side" with respect to the axial direction refers to the right side of Figs. 1 to 3, 5B, and 6.

Further, a front-rear direction means the front-rear direction of a vehicle.

Fig. 1 illustrates an electric steering apparatus incorporating a worm reduction gear of the present embodiment. A front end of a steering shaft 2 having on a rear end thereof a steering wheel 1 (see Fig. 22) is rotatably supported in a housing 3. Thus, a worm wheel 4a is fixed to a part driven rotationally by the steering shaft 2. Meanwhile, a worm shaft 6 (see Fig. 23) is connected to an output shaft of the electric motor 5. Further, a worm tooth part 18 provided on an outer circumferential surface of an axial intermediate part of the worm shaft 6 is engaged with a worm wheel tooth part 19a provided on the outer circumferential surface of the worm wheel 4a, so that a predetermined magnitude of auxiliary torque (auxiliary power) may be applied to the worm wheel 4a from the electric motor 5 in a predetermined direction.

The worm wheel 4a is externally fixed and fitted to an axial intermediate part of the metallic output shaft 7 that corresponds to a rotation shaft and serves as an output part of the auxiliary torque, and is rotated together with the output shaft 7. The output shaft 7 is coupled to the front end of the steering shaft 2 through a torsion bar 9 in the housing 3 in a state where a part near both ends of the axial intermediate part is supported to be rotatable only by one pair of rolling bearings 8a and 8b. The electric motor 5 rotationally drives the worm shaft 6 according to a direction and a magnitude of a steering torque that is detected by a torque sensor 10 and is applied from the steering wheel 1 to the steering shaft 2, and applies the auxiliary torque to the output shaft 7. The rotation of the output shaft 7 is transmitted to a pinion shaft 14 (see Fig. 22) which serves as an input part of a steering gear unit 13 through a pair of universal joints 11a and 11b and an intermediate shaft 12, so that a desired steering angle is given to the steering wheel.

In the case of the illustrated example, a pair of rolling bearings 8a and 8b is ball bearings including, respectively, inner races 21a and 21b that are externally fitted and supported on the output shaft 7, outer races 22a and 22b that are internally fitted and supported in the housing 3, and several balls 23a and 23b that are rolling bodies, respectively, provided to roll between an inner raceway provided on outer circumferential surfaces of the inner races 21a and 21b and an outer raceway provided on inner circumferential surfaces of the outer races 22a and 22b. However, in the case of implementing the invention, other types of rolling bearings such as cylindrical roller bearings and conical roller bearings may be adopted as the pair of rolling bearings 8a and 8b.

The worm wheel 4a is formed by combining an inner wheel element 15a as a core and an outer wheel element 16a as a tooth-part forming body.

The inner wheel element 15a is formed by combining a metal core 24 and a resin core 25, and is configured in an annular shape (approximately ring shape).

The metal core 24 is formed of metal in an annular shape, and includes a short cylindrical metal annular part 26 and a metal flange part 27 that is provided in a ring shape to extend radially outwards from a part closer to the other end of the axial intermediate part of an outer circumferential surface of the metal annular part 26. The metal annular part 26 has a fitting hole 28 for internally fitting and fixing the axial intermediate part of the output shaft 7 to a radially medial part to transmit torque. As the fitting hole 28, for example, it is possible to adopt a simple circular hole for fitting with the axial intermediate part of the output shaft 7 by tight fitting, a circular hole having a key groove for key engagement, a spline hole for spline engagement and the like. The metal flange part 27 has V-shaped notches 29 and 29, corresponding to a cutout parts at a plurality of positions which are equidistant in the circumferential direction to radially extend and be open at an outer circumferential edge. Parts between the adjacent notches 29 and 29 in the circumferential direction are formed as rectangular plate-shaped tongue pieces 30 and 30 extending in the radial direction. Particularly, in the present embodiment, the notch 29 and the tongue piece 30 are provided over a wide radial range from a radially outer end of the metal flange part 27 to a radially inner end thereof.

As metal forming the metal core 24, in addition to an iron alloy such as steel, it is possible to adopt various kinds of metal including a copper alloy, an aluminum alloy, a magnesium alloy and the like. Further, various types of cutting work and plastic working may be adopted as a process for forming the metal core 24. However, it is preferable to adopt the plastic working (forging, pressing, flow forming, etc.) in order to achieve a high yield at low cost. Further, in order to improve bonding properties with the resin core 25, it is more preferable to apply minute unevenness to a surface of the metal core 24 by shot blasting or the like.

The resin core 25 is made of a synthetic resin by injection molding or compression molding, and surrounds the outer circumference of the metal core 24 over the entire circumference through the injection molding or compression molding. Specifically, the resin core 25 surrounds the entire metal flange part 27 while entirely covering the outer circumferential surface of the metal annular part 26 and the radially outer end of the other surface in the axial direction. In this state, the portion of the synthetic resin configuring the resin core 25 enters into each notch 29 and 29, and forms a first inner rotation support part 31 to be engaged with each notch 29 and 29.

A first annular concave part 32 corresponding to an annular concave part is provided throughout a radial intermediate part of one side of the resin core 25 in the axial direction to be recessed in the axial direction. On an outer diameter side circumferential surface constituting the inner surface of the first annular concave part 32, there is provided a first resin concave-convex part 33 in the form of an internal tooth gear, which extends over an entire axial length and an entire periphery of the outer diameter side circumferential surface and corresponds to a resin concave-convex part. The first resin concave-convex part 33 has a plurality of convex parts 34 and 34 each extending in the axial direction over the entire axial length and the entire circumference of the outer diameter side circumferential surface constituting the inner surface of the first annular concave part 32 to be separated from each other (at regular intervals in the circumferential direction in the illustrated example), so that parts between adjacent convex parts 34 and 34 in the circumferential direction serve as concave parts 35 and 35. That is, in the present embodiment, the plurality of concave parts 35 and convex parts 34 configuring the first resin concave-convex part 33 (in other words, boundaries between the concave and convex parts 35 and 34) are formed to be parallel to the axial direction (left-right direction in Figs. 1 to 3) of the resin core 25 (worm wheel 4a) as indicated by a broken line (hidden line) on the upper half part of Fig. 3. The other axial ends of the plurality of convex parts 34 and 34 configuring the first resin concave-convex part 33 are connected to the bottom surface of the first annular concave part 32.

On the other axial end of the outer circumferential surface of the resin core 25, there is provided a second resin concave-convex part 36 in the form of an external tooth gear, which corresponds to the resin concave-convex part. The second resin concave-convex part 36 has on the other axial end of the outer circumferential surface of the resin core 25 a plurality of concave parts 38 and 38 each extending in the axial direction to be separated from each other (at regular intervals in the circumferential direction in this embodiment), so that parts between adjacent concave parts 38 and 38 in the circumferential direction serve as convex parts 37 and 37. That is, in the present embodiment, the plurality of concave parts 38 and convex parts 37 configuring the second resin concave-convex part 36 (in other words, boundaries between the concave and convex parts 38 and 37) are formed to be parallel to the axial direction of the resin core 25 as indicated by the upper half part of Fig. 3.

A second annular concave part 39 is provided throughout a radial outer end of the other axial side of the resin core 25 to be recessed in the axial direction. The outer diameter side circumferential surface constituting the inner surface of the second annular concave part 39 is a cylindrical surface part 40 of a simple cylindrical shape. Further, the inner diameter side circumferential surface constituting the inner surface of the second annular concave part 39 serves as a tilted surface part 41 having a partially tapered shape which is tilted in a direction (radially inward) in which a width dimension in a radial direction of the second annular concave part 39 increases towards the other side in the axial direction. Further, an overhang part 42 is provided throughout a radial inner end of the other axial side of the resin core 25 to protrude to the other side in the axial direction on a radial intermediate part adjacent to a radial outer side.

As synthetic resin forming the resin core 25, polyamide 66 (PA 66), polyamide 46 (PA 46), polyamide 9T (PA 9T), polyphenylene sulfide (PPS), polyethylene terephthalate (PET), polyacetal (POM), phenol and the like may be adopted. Various reinforcing fiber including glass fiber, polyethylene fiber, carbon fiber, aramid fiber and the like may be incorporated into the synthetic resin as necessary. As for the synthetic resin configuring the outer wheel element 16a that will be described later, it is necessary to consider the slidability of an engaging part with the worm tooth part 18. However, since it is not necessary to consider the slidability in the case of the synthetic resin configuring the resin core 25, it is possible to manufacture the outer wheel element at low cost by adding inexpensive glass fiber to relatively inexpensive resin composition that is limited in strength.

The outer wheel element 16a is made of a synthetic resin by injection molding and surrounds the outer circumference of the resin core 25 over the entire circumference through injection molding (insert molding). Specifically, the outer wheel element 16a surrounds the outer circumference of the resin core 25 to cover a continuous range extending from the radial outer end of the bottom surface constituting the inner surface of the first annular concave part 32 on the surface of the resin core 25, through the outer circumferential surface of the resin core 25, to the radial intermediate part of the bottom surface constituting the inner surface of the second annular concave part 39.

In this state, the portion of the synthetic resin configuring the outer wheel element 16a enters into the first annular concave part 32 and the second annular concave part 39, respectively. The part entering into the first annular concave part 32 forms an annular first suppression part 43 while the part entering into the second annular concave part 39 forms an annular second suppression part 44.

Further, in this state, the portion of the synthetic resin configuring the first suppression part 43 enters into the plurality of concave parts 35 and 35 configuring the first resin concave-convex part 33, is engaged with the first resin concave-convex part 33 (having a shape matching that of the first resin concave-convex part 33), and forms a first outer rotation support part 45.

Further, in this state, the portion of the synthetic resin configuring the outer wheel element 16a enters into the plurality of concave parts 38 and 38 configuring the second resin concave-convex part 36, is engaged with the second resin concave-convex part 36 (having a shape matching that of the second resin concave-convex part 36), and forms a second outer rotation support part 46.

The worm wheel tooth part 19a is formed on the outer circumferential surface of the outer wheel element 16a. As shown in the upper half part of Fig. 3, a direction in which a plurality of teeth configuring the worm wheel tooth part 19a is formed is tilted relative to the axial direction of the worm wheel 4a. In this embodiment, the diameter of a tip circle and the diameter of a root circle of the worm wheel tooth part 19a are not changed in the axial direction.

Furthermore, in this embodiment, the dimension of an inner diameter d of the outer wheel element 16a is smaller than the dimension of an outer diameter D of the metal core 24 (metal flange part 27) (d < D). That is, as for the positional relationship of respective parts in the radial direction, the outer circumference of the metal flange part 27 configuring the metal core 24 extends radially outward to be surrounded by the outer wheel element 16a.

In this embodiment, the outer wheel element 16a is made by injection molding. At the same time, the outer wheel element 16a is coupled to the resin core 25. In the case of performing the insert molding, as shown in Fig. 6, the resin core 25 and the metal core 24 are combined to make the inner wheel element 15a, and then the inner wheel element 15a is set in a molding device 47 made by combining a plurality of molds. In this state, molten resin is fed from a runner 49 and a disc gate 50 provided on the other axial side of the inner wheel element 15a, in an annular cavity 48 defined between the resin core 25 and the molding device 47. A radial outer end (outer circumference) of the disc gate 50 is located, in the cavity 48, at a radial inner end of the other axial side of the outer wheel element 16a, and the runner 49 is installed to extend from a central part of the disc gate 50 to the other axial side. The molten resin fed from the runner 49 into the disc gate 50 and the cavity 48 flows from an inner diameter side to an outer diameter side along the other axial side of the resin core 25, so that the portion of the molten resin flows into the second annular concave part 39. In this case, according to the present embodiment, since the tilted surface part 41 is formed on the inner diameter side circumferential surface constituting the inner surface of the second annular concave part 39, the molten resin enters into a part on which a radial outer end of the outer wheel element 16a in the cavity 48 is formed, without largely disturbing the flow. Further, the molten resin fed into the cavity 48 reaches and stops a part corresponding to the first suppression part 43. This part will not strike against the molten resin flowing from the other direction. As a result, it is possible to prevent the occurrence of weak strength, weld, etc. in the outer wheel element 16a obtained by injection molding. After opening the molding device 47 to separate the plurality of molds from each other, the synthetic resin cooled and solidified in the cavity 48 is cut throughout a part corresponding to the radial inner end of the other axial side of the outer wheel element 16a, and is subjected to a finishing process as necessary, thereby obtaining the worm wheel 4a.

As the synthetic resin forming the outer wheel element 16a, in addition to polyamide 66 (PA 66), various kinds of synthetic resins such as polyamide 46 (PA 46), polyamide 9T (PA 9T), polyphenylene sulfide (PPS), polyethylene terephthalate (PET), polyacetal (POM), and phenol may be adopted. Various reinforcing fiber including glass fiber, polyethylene fiber, carbon fiber, aramid fiber and the like may be incorporated into the synthetic resin as necessary.

Further, in the case of carrying out the invention, the synthetic resin configuring the resin core 25 and the synthetic resin configuring the outer wheel element 16a may be different from each other (for example, the synthetic resin forming the outer wheel element 16a may be referred to as thermoplastic resin, while the synthetic resin forming the resin core 25 may be made of thermosetting resin or thermoplastic resin having different properties (including types of reinforcing fibers)). Alternatively, they may be equal to each other.

In the assembled state of the electric steering apparatus of the present embodiment, the other axial side of the resin core 25 configuring the worm wheel 4a is disposed on a part adjacent to the other axial side of the worm wheel 4a, and axially faces one axial side of the inner ring 21a configuring the rolling bearing 8a and one axial side of the outer ring 22a via gaps. Specifically, the radial inner end (the other axial side of the overhang part 42) of the other axial side of the resin core 25 axially faces one axial side of the inner ring 21a, and the radial intermediate part axially faces one axial side of the outer ring 22a. Here, in the present embodiment, one axial side of the inner ring 21a and one axial side of the outer ring 22a are present at the approximately same position in the axial direction, whereas the radial inner end (the other axial side of the overhang part 42) of the other axial side of the resin core 25 is positioned on the other axial side on the radial intermediate part. Therefore, an axial distance X between the radial inner end of the other axial side of the resin core 25 (the other axial side of the overhang part 42) and one axial side of the inner ring 21a is smaller than an axial distance Y between the radial intermediate part of the other axial side of the resin core 25 and one axial side the outer ring 22a (X < Y).

In the case of the worm wheel 4a and the worm reduction gear of the present embodiment having the configuration as described above, the inner wheel element 15a configuring the worm wheel 4a is constituted by the metal core 24 that is made of metal and formed into an annular shape, and the resin core 25 that is made of a synthetic resin, is formed into an annular shape, and surrounds the outer circumference of the metal core 24. Therefore, as compared with the structure of the related art in which the entire inner wheel element is made of metal, the weight of the worm wheel 4a may be reduced.

Further, in the case of the present embodiment, the part of the inner wheel element 15a that is externally fitted and fixed to the axial intermediate part of the output shaft 7 forms the metal annular part 26 of the metal core 24 made of metal, thereby keeping the axial dimension of the metal annular part 26 small, even in the case where the support strength of the inner wheel element 15a is sufficiently secured relative to the axial intermediate part of the output shaft 7. Therefore, the miniaturization of the worm wheel 4a (space-saving of an installation part) can be accordingly realized.

When the auxiliary torque is applied to the output shaft 7 through the worm wheel 4a, moment M in a falling direction is applied to the worm wheel 4a as indicated by an arrow in Fig. 2, based on an axial component of the meshing reaction force acting on the engaging part between the worm wheel tooth part 19a of the worm wheel 4a and the worm tooth part 18 of the worm shaft 6.

In the present embodiment, the resin core 25 surrounds the entire metal flange part 27 configuring the metal core 24. Further, the synthetic resin forming the resin core 25 covers the outer circumferential surface of the metal annular part 26 configuring the metal core 24. Thus, it is possible to increase holding power in the direction of the moment M of the resin core 25 with respect to the metal core 24.

In the present embodiment, the notches 29 and 29 are formed at a plurality of positions in the circumferential direction of the metal flange part 27 configuring the metal core 24, and the portion of the synthetic resin configuring the resin core 25 enters into the respective notches 29 and 29 to configure the first inner rotation support part 31 to be engaged with the respective notches 29 and 29. Therefore, it is possible to ensure the holding power of the resin core 25 in the rotational direction with respect to the metal core 24.

In the present embodiment, in the state where the outer wheel element 16a surrounds the outer circumference of the resin core 25, the dimension of the inner diameter d of the outer wheel element 16a is smaller than the dimension of the outer diameter D of the metal core 24 (metal flange part 27) (d < D). Thus, it is possible to increase the holding power in the direction of moment M of the outer wheel element 16a with respect to the inner wheel element 15a. In other words, according to this embodiment, for the positional relationship of respective parts in the radial direction, the outer circumference of the metal flange part 27 configuring the metal core 24 extends radially outwards to a position where it is enclosed by the outer wheel element 16a (d < D). Thus, when the moment M in the falling direction acts on the worm wheel 4a based on the axial component of the meshing reaction force acting on the engaging part between the worm wheel 4a and the worm shaft 6, the moment M may be efficiently supported by the metal flange part 27 configuring the metal core 24 (by the entire worm wheel 4a). Therefore, sufficient rigidity and toughness of the worm wheel 4a can be secured. As for the worm wheel 4a, dimensional changes in the radial direction and the axial direction of the resin part resulting from environmental changes such as temperature and humidity may be efficiently restricted by the metal flange part 27. Therefore, it is possible to suppress the occurrence of deviation in the engaging part between the worm wheel 4a and the worm shaft 6.

Further, according to this embodiment, the portion of the synthetic resin configuring the outer wheel element 16a enters into the first annular concave part 32 provided on one axial side of the resin core 25 to constitute the annular first suppression part 43, and simultaneously enters into the second annular concave part 39 provided on the other axial side of the resin core 25 to constitute the annular second suppression part 44. Thus, based on the engagement between the first annular concave part 32 and the first suppression part 43 and the engagement between the second annular concave part 39 and the second suppression part 44, the holding power of the outer wheel element 16a with respect to the inner wheel element 15a in the direction of the moment M may be increased. Particularly, in the present embodiment, since the outer diameter side circumferential surface constituting the inner surface of the second annular concave part 39 serves as the cylindrical surface part 40 of the simple cylindrical shape, the engaging strength between the second annular concave part 39 and the second suppression part 44 may be increased with respect to the moment M, as compared with the case where the outer diameter side circumferential surface serves as a tilted surface part that is tilted (radially outwards) in a direction where a width dimension in the radial direction of the second annular concave part 39 increases towards the other axial side. Thus, it is possible to increase the holding power in the direction of moment M of the outer wheel element 16a with respect to the inner wheel element 15a. However, when implementing the invention, the outer diameter side circumferential surface constituting the inner surface of the second annular concave part 39 may be the tilted surface part as described above. In this case, when the outer wheel element 16 is injection molded, the molten resin easily flows smoothly along the tilted surface part, so that the quality of the outer wheel element 16 can be improved.

Further, according to this embodiment, the first resin concave-convex part 33 is circumferentially provided on the outer diameter side circumferential surface constituting the inner surface of the first annular concave part 32, and the portion of the synthetic resin configuring the first suppression part 43 enters into all of the plurality of concave parts 35 and 35 configuring the first resin concave-convex part 33 to configure a first outer rotation support part 45 to be engaged with the first resin concave-convex part 33. Further, the second resin concave-convex part 36 is circumferentially provided on the other axial end of the outer circumferential surface of the resin core 25, and the portion of the synthetic resin configuring the outer wheel element 16a enters into all of the plurality of concave parts 38 and 38 configuring the second resin concave-convex part 36 to configure a second outer rotation support part 46 to be engaged with the second resin concave-convex part 36. Therefore, according to this embodiment, it is possible to secure the holding power in the rotating direction of the outer wheel element 16a with respect to the inner wheel element 15a (resin core 25). Particularly, according to this embodiment, since the first resin concave-convex part 33 is provided throughout the entire axial length of the outer diameter side circumferential surface constituting the inner surface of the first annular concave part 32, the holding power in the rotation direction can be increased.

Further, according to this embodiment, the plurality of concave parts 35 and convex parts 34 configuring the first resin concave-convex part 33 and the plurality of concave parts 38 and convex parts 37 configuring the second resin concave-convex part 36 are formed to be parallel to each other in the axial direction. Therefore, since the deformation of the outer wheel element 16a due to the molding shrinkage of the synthetic resin may be suppressed by the first resin concave-convex part 33 and the second resin concave-convex part 36, the outer wheel element 16a can be molded with high precision.

Further, according to this embodiment, an axial distance X between the other axial side of the resin core 25 (the other axial side of the overhang part 42) and one axial side of the inner race 21a is smaller than an axial distance Y between the other axial side of the resin core 25 (the other axial side of the radial intermediate part) and one axial side of the outer race 22a (X < Y). Therefore, for example, if a part restricting the axial position of the output shaft 7 with respect to the housing 3 (see Fig. 1) is broken and the worm wheel 4a is displaced to the other side in the axial direction together with the output shaft 7, the other axial side of the resin core 25 comes into contact with one axial side of the inner race 21a (on the other axial side of the overhang part 42) among one axial side of the inner race 21a and one axial side of the outer race 22a, and does not come into contact with one axial side of the outer race 22a (on the other axial side of the radial intermediate part), thereby preventing the rotation of the worm wheel 4a from being locked.

### [Second embodiment]

A second embodiment of the invention will be described with reference to Figs. 7 to 12.

According to this embodiment, a metal concave-convex part 51 is circumferentially provided throughout an axial half part of the outer circumferential surface of the metal annular part 26 configuring the metal core 24a (part located on one side in the axial direction from the metal flange part 27) of the inner wheel element 15b configuring the worm wheel 4b. In this state, the portion of the synthetic resin configuring the resin core 25a enters into the plurality of concave parts configuring the metal concave-convex part 51 to configure a second inner rotation support part 52 to be engaged with the metal concave-convex part 51. Thereby, the holding power of the resin core 25a with respect to the metal core 24a in the rotational direction is improved.

Meanwhile, unlike the worm wheel 4 of the structure of the related art shown in Figs. 25 to 27, the concave-convex part 17 is circumferentially provided on the outer circumferential surface of the inner wheel element 15, and the portion of the synthetic resin configuring the outer wheel element 16 enters into the plurality of concave parts configuring the concave-convex part 17. In this structure, a radial thickness of a part of the outer wheel element 16 overlapping with a radial outer part of the concave-convex part 17 may vary for a part where the plurality of teeth 20 and 20 configuring the worm wheel tooth part 19 is located (see Figs. 26 and 27). In such a case, since the amount of molding shrinkage at the time of injection molding varies for each part where the plurality of teeth 20 and 20 is located {the amount of molding shrinkage increases at a part where the thickness is large in the radial direction (for example, part α in Fig. 27), and the amount of molding shrinkage reduces at a part where the thickness is small in the radial direction (for example, part β in Fig. 27)}, there occurs a difference in size of the plurality of teeth 20 and 20 after molding. Due to this fact, there is a possibility that manufacturing error such as pitch error may occur in the worm wheel tooth part 19. The manufacturing error of the worm wheel tooth part 19 does not pose any problem in practical use, but is preferably minimized from the viewpoint of improving the transmission efficiency of torque by the worm reduction gear.

Therefore, in order to respond to such a demand, according to this embodiment, the resin core 25a serves as the cylindrical surface part 53 in which a radial distance from a central axis of the inner wheel element 15a is not substantially changed over the entire outer circumferential surface (excluding chamfered parts in the case where the chamfered parts are provided on both end edges in the axial direction). According to this embodiment, the cylindrical surface part 53 has a generatrix parallel to the central axis of the resin core 25a (worm wheel 4a), and is formed in a single cylindrical shape in which a diameter does not change in the axial direction. Therefore, the radial thickness of the part of the outer wheel element 16b overlapping with the radial outer part of the cylindrical surface part 53 that is the outer circumferential surface of the resin core 25a, substantially remains constant at portions where the teeth 20a and 20a configuring the worm wheel tooth part 19a are located.

Further, according to this embodiment, the diameters of the tip circle and the root circle of the worm wheel tooth part 19a provided on the outer circumferential surface of the outer wheel element 16b are not changed in the axial direction, as in the above first embodiment. In addition, according to this embodiment, the radial outer end of one axial side of the resin core 25a (portion located radially outwards from the first annular concave part 32) and the radial outer end of the other axial side of the resin core 25a (portion located radially outwards from the second annular concave part 39), which are continuous parts (directly or via a chamfered part) with respect to both axial end edges of the cylindrical surface part 53 which is the outer circumferential surface of the resin core 25a are flat surface parts 54a and 54b of the annular shape which are perpendicular to the central axis of the resin core 25a, respectively. In other words, both axial end edges of the cylindrical surface part 53 which is the outer circumferential surface of the resin core 25a, each have a circular shape whose axial position does not change in the circumferential direction.

Therefore, according to this embodiment, the radial thickness of the part of the outer wheel element 16b overlapping with the radial outer part of the cylindrical surface of the resin core 25a, substantially remains constant at portions where the plurality of teeth 20a and 20a configuring the worm wheel tooth part 19a is located, over the entire axial length including both axial end edges. Thus, according to this embodiment, as shown in Fig. 10, the amount of molding shrinkage at the time of injection molding may substantially remain constant at portions where the plurality of teeth 20a and 20a is located. Therefore, it is possible to substantially equalize the size (radial thickness) of the plurality of teeth 20a and 20a after molding and thereby to suppress the manufacturing error such as pitch error in the worm wheel tooth part 19a.

Further, in this embodiment, a configuration is adopted in which at least one axial part of the engaging part 64 (part shown by the diagonal lattice of Fig. 8) between the worm tooth part 18 and the worm wheel tooth part 19a axially overlaps with the cylindrical surface part 53 present on the outer circumferential surface of the resin core 25a, in the state where the electric power steering device is assembled.

Particularly, in this embodiment, a configuration is adopted in which the entire engaging part 64 radially overlaps with the cylindrical surface part 53. Thus, the axial width dimension S of the engaging part 64 is set to be equal to or less than the axial width dimension T of the cylindrical surface part 53 {S ≤ T (S < T in the example shown in Fig. 8)}, and the axial range where the engaging part 64 is located is accommodated in the axial range where the cylindrical surface part 53 is located.

However, when implementing the invention, for example, the axial width dimension S of the engaging part 64 may be larger than the axial width dimension T of the cylindrical surface part 53 (S > T), and the axial range where the cylindrical surface part 53 is located may be accommodated in the axial range where the engaging part 64 is located.

In any case, according to this embodiment, the entire engaging part 64 radially overlaps with the cylindrical surface part 53 in the state in which the worm reduction gear is assembled. In other words, the part of the worm wheel tooth part 19a for suppressing the manufacturing error such as the pitch error as described above is engaged with the worm tooth part 18. Therefore, the meshing state of the engaging part 64 can be improved. Meanwhile, when implementing the invention, in the case where only an axial part of the engaging part 64 radially overlaps with the cylindrical surface part 53, the larger the overlapping ratio (axial range) is, the better the meshing state of the engaging part is.

Further, according to this embodiment, in order to radially overlap with the entire engaging part 64 with the cylindrical surface part 53, the axial width dimension S of the engaging part 64 is set to be equal to or less than the axial width dimension T of the cylindrical surface part 53 (S ≤ T). However, if the dimensions S and T are set to be substantially equal to each other under these conditions, the meshing state of the engaging part 64 can be improved while minimizing the axial dimension of the inner wheel element 15a. The same applies to the case of adopting the condition of S > T.

The other configuration and effect are the same as the above-described first embodiment.

### [Third Embodiment]

The third embodiment of the invention will be described with reference to Fig. 13.

According to this embodiment, a metal concave-convex part 51a is circumferentially provided throughout the entire circumference of the other axial half part of the outer circumferential surface of the metal annular part 26 configuring the metal core 24b (part located on the other axial side from the metal flange part 27), in the inner wheel element 15c configuring the worm wheel 4c. In this state, the portion of the synthetic resin configuring the resin core 25b enters into a plurality of concave parts configuring the metal concave-convex part 51a, and configures a third inner rotation support part 55 to be engaged with the metal concave-convex part 51a. Thereby, it is possible to increase holding power in the rotating direction of the resin core 25b with respect to the metal core 24b.

Further, according to this embodiment, the radial width dimension of the second annular concave part 39a provided on the other axial side of the resin core 25b, which corresponds to the annular concave part, is almost equal to the radial width dimension of the first annular concave part 32 provided on one axial side of the resin core 25b. In addition, a third resin concave-convex part 56 having the same configuration as the first resin concave-convex part 33 is provided on the outer circumferential surface constituting the inner surface of the second annular concave part 39a. In this state, the portion of the synthetic resin forming the second suppression part 44a of the outer wheel element 16c enters into a plurality of concave parts 58 and 58 configuring the third resin concave-convex part 56 (parts between the adjacent convex parts 57 and 57 in the circumferential direction), and configures a third outer rotation support part 59 to be engaged with the third resin concave-convex part 56. Thereby, it is possible to increase holding power in the rotating direction of the outer wheel element 16c with respect to the resin core 25b.

The other configuration and effect are the same as the above-described second embodiment.

Meanwhile, according to this embodiment, the inner wheel element 15c including the resin core 25b and the outer wheel element 16c may be symmetrically formed in the axial direction (i.e. bilateral symmetry shape when viewed from the sheet of Fig. 13). In this case, the overhang parts 42 may be provided on both sides in the axial direction, for example.

### [Fourth Embodiment]

The fourth embodiment of the invention will be described with reference to Figs. 14 and 15.

According to this embodiment, projecting parts 60 and 60 projecting towards one axial side are provided, respectively, on portions adjacent to both side edges in the circumferential direction of the plurality of notches 29 and 29 on one axial side of the metal flange part 27a configuring the metal core 24c in the inner wheel element 15d configuring the worm wheel 4d, over the entire length of both side edges in the circumferential direction. In other words, the projecting parts 60, 60 are provided on the metal flange part 27a in a state of being bent toward one axial side from a range extending over the entire length of both side edges in the circumferential direction of the plurality of tongue pieces 30 and 30, respectively. Further, it is possible to increase holding power in the rotating direction of the resin core 25c with respect to the metal core 24c, due to the engagement between each projecting part 60, 60 and the synthetic resin forming the resin core 25c.

Meanwhile, the invention may be configured such that the projecting part 60 is provided only on one of both circumferential side edges of each notch 29 and 29 (each tongue piece 30 and 30), and the projecting part 60 is provided only on a part adjacent to the notch 29 (tongue piece 30) of the notches 29 and 29 (the tongue pieces 30 and 30).

The other configuration and effect are the same as the above-described second embodiment.

### [Fifth Embodiment]

The fifth embodiment of the invention will be described with reference to Figs. 16 and 17.

According to this embodiment, rectangular through holes 61 and 61, extending in a radial direction and corresponding to the cutout parts, are formed at a plurality of positions spaced apart from each other at regular intervals in the circumferential direction of the metal flange part 27b configuring the metal core 24d, in the inner wheel element 15e configuring the worm wheel 4e. In this state, the portion of the synthetic resin configuring the resin core 25d enters into each through hole 61, 61, and configures a first inner rotation support part 31a to be engaged with each through hole 61, 61. Thereby, it is possible to increase holding power in the rotating direction of the resin core 25d with respect to the metal core 24d. Further, according to this embodiment, rectangular ring shaped projecting parts 60a and 60a projecting towards one axial side are provided, respectively, on portions adjacent to the circumferences of the respective through holes 61 and 61, in one axial side of the metal flange part 27b. In other words, the rectangular ring shaped projecting parts 60a and 60a are provided on the metal flange part 27b in a state of being bent toward one axial side from a range extending over the entire circumference of each through hole 61, 61, respectively. Further, it is possible to increase holding power in the rotating direction of the resin core 25d with respect to the metal core 24d, due to the engagement between each projecting part 60a, 60a and the synthetic resin forming the resin core 25d.

Meanwhile, the invention may be configured such that the projecting part 60a is provided only on a part adjacent to the through hole 61 (a part around the through hole 61) of the through holes 61 and 61.

The other configuration and effect are the same as the above-described second embodiment.

### [Sixth Embodiment]

The sixth embodiment of the invention will be described with reference to Fig. 18.

This embodiment is different from the above-described second embodiment in the configuration of the first annular concave part 32a provided on one axial side of the resin core 25e, in the inner wheel element 15f configuring the worm wheel 4f. According to this embodiment, a plurality of concave parts 35a and convex parts 34a configuring the first resin concave-convex part 33a provided on the outer diameter side circumferential surface in the inner surface of the first annular concave part 32a are formed to be tilted in a direction opposite to the inclination angle of a plurality of teeth 20a and 20a configuring the worm wheel tooth part 19a provided on the outer circumferential surface of the outer wheel element 16d, with respect to the central axis of the worm wheel 4f.

According to this embodiment, the inclination direction of the plurality of teeth 20a and 20a configuring the worm wheel tooth part 19a is opposite to the inclination direction of the plurality of the concave parts 35a and convex parts 34a configuring the first resin concave-convex part 33a, with respect to the central axis of the worm wheel 4f. Thus, when torque is transmitted from the worm shaft 6 (see Fig. 23) to the worm wheel 4f, a force is applied in a direction in which the synthetic resin configuring the outer wheel element 16d does not escape from the plurality of concave parts 35a and 35a configuring the first resin concave-convex part 33a towards one axial side.

The other configuration and effect are the same as the above-described second embodiment.

### [Seventh Embodiment]

The seventh embodiment of the invention will be described with reference to Figs. 19 and 20.

This embodiment is a modification of the first embodiment shown in Figs. 1 to 6.

When comparing this embodiment with the first embodiment, the radial depth of the plurality of notches 29a and 29a formed in the metal flange part 27c configuring the metal core 24e in the inner wheel element 15g configuring the worm wheel 4g is reduced, and each notch 29a, 29a (and tongue pieces 30a and 30a that are parts between adjacent notches 29a and 29a in the circumferential direction) is present only on the radial outer end edge of the metal flange part 27c, thereby increasing the rigidity of the metal core 24e. Meanwhile, by increasing the number of the notches 29a and 29a, the holding power in the rotating direction of the resin core 25f for the metal core 24e is sufficiently secured based on the engagement between the notches 29a and 29a and the first inner rotation support part 31b of the resin core 25f.

The other configuration and effect are the same as the above-described first embodiment.

### [Eighth Embodiment]

The eighth embodiment of the invention will be described with reference to Fig. 21.

This embodiment is a modification of the second embodiment shown in Figs. 7 to 12B.

According to this embodiment, the synthetic resin forming the first suppression part 43a in the outer wheel element 16e of the worm wheel 4h covers the entire inner surface of the first annular concave part 32b provided on one axial side of the resin core 25g configuring the inner wheel element 15h.

Further, the radial width dimension of the second annular concave part 39b provided on the other axial side of the resin core 25g is substantially equal to the radial width dimension of the first annular concave part 32b. In addition, the synthetic resin forming the second suppression part 44a of the resin core 25g covers a continuous range from the outer diameter side circumferential surface (cylindrical surface part 40) to the axial half part of the inner diameter side circumferential surface (tilted surface part 41), in the inner surface of the second annular concave part 39b.

Such a configuration increases the holding power in the direction of moment M of the outer wheel element 16e with respect to the resin core 25g.

Further, according to this embodiment, a fourth resin concave-convex part 62 is circumferentially provided throughout the entire inner diameter side circumferential surface constituting the inner surface of the first annular concave part 32b. Further, the portion of the synthetic resin forming the first suppression part 43a of an outer wheel element 16e enters into a plurality of concave parts configuring the fourth resin concave-convex part 62, and configures a fourth inner rotation support part 63 to be engaged with the fourth resin concave-convex part 62. Such a configuration increases the holding power in the rotating direction of the resin core 25g with respect to the metal core 24a.

The other configuration and effect are the same as the above-described second embodiment.

Meanwhile, the invention may be implemented by appropriately combining the configurations of the above-described embodiments with each other.

Further, in the structures of the above-described embodiments, if at least a part (for example, the cylindrical surface part, the entire surface of the resin core) covered with the synthetic resin forming the outer wheel element in the surface of the resin core, is a minute concave-convex surface formed by various processes such as knurling, graining and shot blasting, the portion of the synthetic resin forming the outer wheel element enters into the concave part configuring this minute concave-convex surface, so that the holding power (adhesiveness) of the outer wheel element to the resin core can be increased. Even in the case of adopting such a configuration, if the depth of the concave part configuring the minute concave-convex surface is set to 1/10 or less (for example, 1/20 or 1/30 or less) of the radial height of the teeth configuring the worm wheel tooth part and does not affect the volume of the synthetic resin forming the outer wheel element, it is possible to suppress the manufacturing error of the part of the worm wheel tooth part meshing with the worm tooth part.

### INDUSTRIAL APPLICABILITY

The worm wheel and the worm reduction gear of the invention can be incorporated into various mechanical devices such as a wiper device, without being limited to the electric power steering device.

This application is based on Japanese Patent Application No. 2016-026543 filed on February 16, 2016 and Japanese Patent Application No. 2016-204201 filed on October 18,2016.

### DESCRIPTION OF REFERENCE NUMERALS AND SIGNS

- 1:: steering wheel
- 2:: steering shaft
- 3:: housing
- 4, 4a to 4h:: worm wheel
- 5:: electric motor
- 6:: worm shaft
- 7:: output shaft
- 8a, 8b:: rolling bearing
- 9:: torsion bar
- 10:: torque sensor
- 11a, 11b:: universal joint
- 12:: intermediate shaft
- 13:: steering gear unit
- 14:: pinion shaft
- 15, 15a to 15h:: inner wheel element
- 16, 16a to 16e:: outer wheel element
- 17:: concave-convex part
- 18:: worm tooth part
- 19, 19a:: worm wheel tooth part
- 20, 20a:: teeth
- 21a, 21b:: inner race
- 22a, 22b:: outer race
- 23a, 23b:: ball
- 24, 24a to 24e:: metal core
- 25, 25a to 25g:: resin core
- 26:: metal annular part
- 27, 27a to 27c:: metal flange part
- 28:: fitting hole
- 29, 29a:: notch
- 30, 30a:: tongue piece
- 31, 31a, 31b:: first inner rotation support part
- 32, 32a, 32b:: first annular concave part
- 33, 33a:: first resin concave-convex part
- 34, 34a:: convex part
- 35, 35a:: concave part
- 36:: second resin concave-convex part
- 37:: convex part
- 38:: concave part
- 39, 39a, 39b:: second annular concave part
- 40:: cylindrical surface part
- 41:: tilted surface part
- 42:: overhang part
- 43, 43a:: first suppression part
- 44, 44a:: second suppression part
- 45:: first outer rotation support part
- 46:: second outer rotation support part
- 47:: molding device
- 48:: cavity
- 49:: runner
- 50:: disc gate
- 51, 51a:: metal concave-convex part
- 52:: second inner rotation support part
- 53:: cylindrical surface part
- 54a, 54b:: flat surface part
- 55:: third inner rotation support part
- 56:: third resin concave-convex part
- 57:: convex part
- 58:: concave part
- 59:: third outer rotation support part
- 60, 60a:: projecting part
- 61:: through hole
- 62:: fourth resin concave-convex part
- 63:: fourth inner rotation support part
- 64:: engaging part

## Claims

1. A worm wheel (4, 4a, 4b, 4c, 4d, 4e, 4f, 4g, 4h) comprising:
an inner wheel element (15, 15a, 15b, 15c, 15d, 15e, 15f, 15g, 15h); and
an outer wheel element (16, 16a, 16b, 16c, 16d, 16e), wherein:
the inner wheel element (15, 15a, 15b, 15c, 15d, 15e, 15f, 15g, 15h) includes: a metal core (24, 24a, 24b, 24c, 24d, 24e) made of metal and formed in an annular shape; and a resin core (25, 25a, 25b, 25c, 25d, 25e, 25f, 25g) which is made of a synthetic resin and formed in an annular shape to surround an outer circumference of the metal core (24, 24a, 24b, 24c, 24d, 24e);
the outer wheel element is made of a synthetic resin, formed in an annular shape, includes a worm wheel tooth part (19, 19a) on an outer circumferential surface, and surrounds an outer circumference of the resin core (25, 25a, 25b, 25c, 25d, 25e, 25f, 25g); and **characterized in that**:
the dimension of an inner diameter of the outer wheel element (16a) is smaller than the dimension of an outer diameter of the metal core (24, 24a, 24b, 24c, 24d, 24e).

2. The worm wheel (4, 4a, 4b, 4c, 4d, 4e, 4f, 4g, 4h) according to claim 1, wherein:
the metal core (24, 24a, 24b, 24c, 24d, 24e) includes a metal annular part (26) and a metal flange part (27, 27a, 27b, 27c) extending radially outwards from an axial part of an outer circumferential surface of the metal annular part (26); and
the resin core (25, 25a, 25b, 25c, 25d, 25e, 25f, 25g) surrounds the metal flange part (27, 27a, 27b, 27c).

3. The worm wheel (4, 4a, 4b, 4c, 4d, 4e, 4f, 4g, 4h) according to claim 2, wherein:
cutout parts (29, 29a, 61) are provided at one or more positions in a circumferential direction of the metal flange part (27); and
a portion of the synthetic resin forming the resin core (25, 25a, 25b, 25c, 25d, 25e, 25f, 25g) enters into the cutout parts (29, 29a, 61).

4. The worm wheel (4, 4a, 4b, 4c, 4d, 4e, 4f, 4g, 4h) according to claim 3, wherein
a projecting part (60, 60a) projecting in an axial direction is provided on an axial side surface of the metal flange part (27, 27a, 27b 27,c) to be adjacent to at least one of the cutout parts (29, 29a, 61).

5. The worm wheel (4, 4a, 4b, 4c, 4d, 4e, 4f, 4g, 4h) according to any one of claims 2 to 4, wherein:
a metal concave-convex part (51, 51a) is circumferentially provided on the outer circumferential surface of the metal annular part (26); and
the portion of the synthetic resin forming the resin core (25, 25a, 25b, 25c, 25d, 25e, 25f, 25g) enters into a concave part configuring the metal concave-convex part (51, 51a).

6. The worm wheel (4, 4a, 4b, 4c, 4d, 4e, 4f, 4g, 4h) according to any one of claims 1 to 5, wherein:
an annular concave part (32, 32a, 32b) is provided to be recessed in the axial direction over an entire circumference at a part located radially inside from an outer circumferential edge in an axial side surface of the resin core (25, 25a, 25b, 25c, 25d, 25e, 25f, 25g); and
the portion of the synthetic resin configuring the outer wheel element (16, 16a, 16b, 16c, 16d, 16e) enters into the annular concave part (32, 32a, 32b).

7. The worm wheel (4, 4a, 4b, 4c, 4d, 4e, 4f, 4g, 4h) according to any one of claims 1 to 6, wherein:
a resin concave-convex part (33, 33a) is circumferentially formed on a surface of the resin core (25, 25a, 25b, 25c, 25d, 25e, 25f, 25g); and
the portion of the synthetic resin configuring the outer wheel element (16, 16a, 16b, 16c, 16d, 16e) enters into a concave part (35, 35a) configuring the resin concave-convex part (33, 33a).

8. The worm wheel (4, 4a, 4b, 4c, 4d, 4e, 4f, 4g, 4h) according to claim 7, wherein:
an annular concave part (32, 32a, 32b) is provided to be recessed in the axial direction over an entire circumference at a part located radially inside from an outer circumferential edge in an axial side surface of the resin core (25, 25a, 25b, 25c, 25d, 25e, 25f, 25g); and
the resin concave-convex part (33, 33a) is provided on an inner surface of the annular concave part (32, 32a, 32b).

9. The worm wheel (4, 4a, 4b, 4c, 4d, 4e, 4f, 4g, 4h) according to any one of claims 1 to 8, wherein
at least a part of the outer circumferential surface of the resin core (25, 25a, 25b, 25c, 25d, 25e, 25f, 25g) in the axial direction serves as a cylindrical surface part (40).

10. The worm wheel (4, 4a, 4b, 4c, 4d, 4e, 4f, 4g, 4h) according to any one of claims 1 to 9, wherein
at least a part covered by the synthetic resin forming the outer wheel element (16, 16a, 16b, 16c, 16d, 16e) in a surface of the resin core (25, 25a, 25b, 25c, 25d, 25e, 25f, 25g) serves as a minute concave-convex surface.

11. A worm reduction gear comprising:
a housing (3);
a rotation shaft rotatably supported with respect to the housing;
a worm wheel (4, 4a, 4b, 4c, 4d, 4e, 4f, 4g, 4h) including a worm wheel tooth part (19, 19a) on an outer circumferential surface, and externally fitted and fixed to the rotation shaft; and
a worm shaft (6) including a worm tooth part (18) on an axial intermediate part of an outer circumferential surface, and supported to be rotatable with respect to the housing (3), in a state where the worm tooth part (18) is engaged with the worm wheel tooth part (19, 19a), wherein
the worm wheel (4, 4a, 4b, 4c, 4d, 4e, 4f, 4g, 4h) is the worm wheel described in any one of claims 1 to 10.

12. The worm reduction gear according to claim 11, wherein
an axial range radially overlapping with at least an axial part of an engaging part between the worm wheel tooth part (19, 19a) and the worm tooth part (18) in an outer circumferential surface of a resin core (25, 25a, 25b, 25c, 25d, 25e, 25f, 25g) configuring the worm wheel (4, 4a, 4b, 4c, 4d, 4e, 4f, 4g, 4h) serves as a cylindrical surface part (40).

13. The worm reduction gear according to claim 12, wherein
an axial range radially overlapping with the entire engaging part in the outer circumferential surface of the resin core (25, 25a, 25b, 25c, 25d, 25e, 25f, 25g) serves as the cylindrical surface part (40).

14. The worm reduction gear according to claim 12 or 13, wherein
the entire outer circumferential surface of the resin core (25, 25a, 25b, 25c, 25d, 25e, 25f, 25g) serves as the cylindrical surface part (40).

## Patentansprüche

1. Schneckenrad (4, 4a, 4b, 4c, 4d, 4e, 4f, 4g, 4h), das Folgendes umfasst:
ein inneres Radelement (15, 15a, 15b, 15c, 15d, 15e, 15f, 15g, 15h); und
ein äußeres Radelement (16, 16a, 16b, 16c, 16d, 16e), wobei:
das innere Radelement (15, 15a, 15b, 15c, 15d, 15e, 15f, 15g, 15h) Folgendes umfasst:
einen Metallkern (24, 24a, 24b, 24c, 24d, 24e), der aus Metall besteht und ringförmig ausgebildet ist; und
einen Harzkern (25, 25a, 25b, 25c, 25d, 25e, 25f, 25g), der aus einem Kunstharz besteht und ringförmig ausgebildet ist, um einen Außenumfang des Metallkerns (24, 24a, 24b, 24c, 24d, 24e) zu umgeben;
wobei das äußere Radelement aus Kunstharz besteht, ringförmig ausgebildet ist, einen Schneckenradzahnteil (19, 19a) auf einer Außenumfangsfläche umfasst und einen Außenumfang des Harzkerns (25, 25a, 25b, 25c, 25d, 25e, 25f, 25g) umgibt; und **dadurch gekennzeichnet ist, dass**:
die Abmessung eines Innendurchmessers des äußeren Radelements (16a) kleiner als die Abmessung eines Außendurchmessers des Metallkerns (24, 24a, 24b, 24c, 24d, 24e) ist.

2. Schneckenrad (4, 4a, 4b, 4c, 4d, 4e, 4f, 4g, 4h) nach Anspruch 1, wobei
der Metallkern (24, 24a, 24b, 24c, 24d, 24e) einen Metallringteil (26) und einen Metallflanschteil (27, 27a, 27b, 27c) umfasst, der sich von einem Axialteil einer Außenumfangsfläche des Metallringteils (26) radial nach außen erstreckt; und
der Harzkern (25, 25a, 25b, 25c, 25d, 25e, 25f, 25g) den Metallflanschteil (27, 27a, 27b, 27c) umgibt.

3. Schneckenrad (4, 4a, 4b, 4c, 4d, 4e, 4f, 4g, 4h) nach Anspruch 2, wobei
Ausschnittteile (29, 29a, 61) an einer oder mehreren Positionen in einer Umfangsrichtung des Metallflanschteils (27) bereitgestellt sind; und
ein Abschnitt des Kunstharzes, der den Harzkern (25, 25a, 25b, 25c, 25d, 25e, 25f, 25g) ausbildet, in die Ausschnittteile (29, 29a, 61) eindringt.

4. Schneckenrad (4, 4a, 4b, 4c, 4d, 4e, 4f, 4g, 4h) nach Anspruch 3, wobei
ein vorstehender Teil (60, 60a), der in axialer Richtung vorsteht, auf einer Axialseitenfläche des Metallflanschteils (27, 27a, 27b, 27c) bereitgestellt ist, um zu zumindest einem der Ausschnittteile (29, 29a, 61) benachbart zu sein.

5. Schneckenrad (4, 4a, 4b, 4c, 4d, 4e, 4f, 4g, 4h) nach einem der Ansprüche 2 bis 4, wobei:
ein konkaver/konvexer Metallteil (51, 51a) in Umfangsrichtung auf der Außenumfangsfläche des Metallringteils (26) bereitgestellt ist; und
der Abschnitt des Kunstharzes, der den Harzkern (25, 25a, 25b, 25c, 25d, 25e, 25f, 25g) ausbildet, in einen konkaven Teil, der den konkaven/konvexen Metallteil (51, 51a) ausbildet, eindringt.

6. Schneckenrad (4, 4a, 4b, 4c, 4d, 4e, 4f, 4g, 4h) nach einem der Ansprüche 1 bis 5, wobei:
ein ringförmiger konkaver Teil (32, 32a, 32b) in axialer Richtung über einen gesamten Umfang an einem Teil, der sich radial innerhalb einer Außenumfangskante in einer Axialseitenfläche des Harzkerns (25, 25a, 25b, 25c, 25d, 25e, 25f, 25g) befindet, vertieft bereitgestellt ist; und
der Abschnitt des Kunstharzes, der das äußere Radelement (16, 16a, 16b, 16c, 16d, 16e) ausbildet, in den ringförmigen konkaven Teil (32, 32a, 32b) eindringt.

7. Schneckenrad (4, 4a, 4b, 4c, 4d, 4e, 4f, 4g, 4h) nach einem der Ansprüche 1 bis 6, wobei:
ein konkaver/konvexer Harzteil (33, 33a) in Umfangsrichtung auf einer Fläche des Harzkerns (25, 25a, 25b, 25c, 25d, 25e, 25f, 25g) ausgebildet ist; und
der Abschnitt des Kunstharzes, der das äußere Radelement (16, 16a, 16b, 16c, 16d, 16e) ausbildet, in einen konkaven Teil (35, 35a), der den konkaven/konvexen Harzteil (33, 33a) ausbildet, eindringt.

8. Schneckenrad (4, 4a, 4b, 4c, 4d, 4e, 4f, 4g, 4h) nach Anspruch 7, wobei:
ein ringförmiger konkaver Teil (32, 32a, 32b) in axialer Richtung über einen gesamten Umfang an einem Teil, der sich radial innerhalb einer Außenumfangskante in einer Achsenseitenfläche des Harzkerns (25, 25a, 25b, 25c, 25d, 25e, 25f, 25g) befindet, vertieft bereitgestellt ist; und
der konkave/konvexe Harzteil (33, 33a) auf einer Innenfläche des ringförmigen konkaven Teils (32, 32a, 32b) bereitgestellt ist.

9. Schneckenrad (4, 4a, 4b, 4c, 4d, 4e, 4f, 4g, 4h) nach einem der Ansprüche 1 bis 8, wobei zumindest ein Teil der Außenumfangsfläche des Harzkerns (25, 25a, 25b, 25c, 25d, 25e, 25f, 25g) in axialer Richtung als Zylinderflächenteil (40) dient.

10. Schneckenrad (4, 4a, 4b, 4c, 4d, 4e, 4f, 4g, 4h) nach einem der Ansprüche 1 bis 9, wobei zumindest ein Teil in einer Fläche des Harzkerns (25, 25a, 25b, 25c, 25d, 25e, 25f, 25g), der von dem Kunstharz, das das äußere Radelement (16, 16a, 16b, 16c, 16d, 16e) ausbildet, bedeckt ist, als kleine konkave/konvexe Fläche dient.

11. Schneckenuntersetzungsgetriebe, das Folgendes umfasst:
ein Gehäuse (3);
eine Drehwelle, die in Bezug auf das Gehäuse drehbar gelagert ist;
ein Schneckenrad (4, 4a, 4b, 4c, 4d, 4e, 4f, 4g, 4h), das einen Schneckenradzahnteil (19, 19a) auf einer Außenumfangsfläche umfasst und extern an die Drehwelle angepasst und an dieser befestigt ist; und
eine Schneckenwelle (6), die einen Schneckenzahnteil (18) auf einem Achsenzwischenteil einer Außenumfangsfläche umfasst und in einem Zustand, in dem sich der Schneckenzahnteil (18) mit dem Schneckenradzahnteil (19, 19a) in Eingriff befindet, in Bezug auf das Gehäuse (3) drehbar gelagert ist, wobei
das Schneckenrad (4, 4a, 4b, 4c, 4d, 4e, 4f, 4g, 4h) ein Schneckenrad nach einem der Ansprüche 1 bis 10 ist.

12. Schneckenuntersetzungsgetriebe nach Anspruch 11, wobei ein axialer Bereich, der radial mit zumindest einem Axialteil eines Eingriffsteils zwischen dem Schneckenradzahnteil (19, 19a) und dem Schneckenzahnteil (18) in einer Außenumfangsfläche eines Harzkerns (25, 25a, 25b, 25c, 25d, 25e, 25f, 25g), der das Schneckenrad (4, 4a, 4b, 4c, 4d, 4e, 4f, 4g, 4h) ausbildet, überlappt, als ein Zylinderflächenteil (40) dient.

13. Schneckenuntersetzungsgetriebe nach Anspruch 12, wobei ein axialer Bereich, der radial mit dem gesamten Eingriffsteil in der Außenumfangsfläche des Harzkerns (25, 25a, 25b, 25c, 25d, 25e, 25f, 25g) überlappt, als der Zylinderflächenteil (40) dient.

14. Schneckenuntersetzungsgetriebe nach Anspruch 12 oder 13, wobei die gesamte Außenumfangsfläche des Harzkerns (25, 25a, 25b, 25c, 25d, 25e, 25f, 25g) als der Zylinderflächenteil (40) dient.

## Revendications

1. Roue tangente (4, 4a, 4b, 4c, 4d, 4e, 4f, 4g, 4h) comprenant :
un élément de roue interne (15, 15a, 15b, 15c, 15d, 15e, 15f, 15g, 15h) ; et
un élément de roue externe (16, 16a, 16b, 16c, 16d, 16e), dans laquelle :
l'élément de roue interne (15, 15a, 15b, 15c, 15d, 15e, 15f, 15g, 15h) comprend : un noyau métallique (24, 24a, 24b, 24c, 24d, 24e) réalisé à partir de métal et formé selon une forme annulaire ; et un noyau en résine (25, 25a, 25b, 25c, 25d, 25e, 25f, 25g) qui est réalisé à partir d'une résine synthétique et formé selon un forme annulaire pour entourer une circonférence externe du noyau métallique (24, 24a, 24b, 24c, 24d, 24e) ;
l'élément de roue externe est réalisé à partir d'une résine synthétique, formé selon une forme annulaire, comprenant une partie de dent de roue tangente (19, 19a) sur une surface circonférentielle externe et entoure une circonférence externe du noyau en résine (25, 25a, 25b, 25c, 25d, 25e, 25f, 25g) ; et **caractérisée en ce que** :
la dimension d'un diamètre interne de l'élément de roue externe (16a) est inférieure à la dimension d'un diamètre externe du noyau métallique (24, 24a, 24b, 24c, 24d, 24e).

2. Roue tangente (4, 4a, 4b, 4c, 4d, 4e, 4f, 4g, 4h) selon la revendication 1, dans laquelle :
le noyau métallique (24, 24a, 24b, 24c, 24d, 24e) comprend une partie annulaire métallique (26) et une partie de bride métallique (27, 27a, 27b, 27c) s'étendant radialement vers l'extérieur à partir d'une partie axiale d'une surface circonférentielle externe de la partie annulaire métallique (26) ; et
le noyau en résine (25, 25a, 25b, 25c, 25d, 25e, 25f, 25g) entoure la partie de bride métallique (27, 27a, 27b, 27c) .

3. Roue tangente (4, 4a, 4b, 4c, 4d, 4e, 4f, 4g, 4h) selon la revendication 2, dans laquelle :
des parties découpées (29, 29a, 61) sont prévues dans une ou plusieurs positions dans une direction circonférentielle de la partie de bride métallique (27) ; et
une partie de la résine synthétique formant le noyau en résine (25, 25a, 25b, 25c, 25d, 25e, 25f, 25g) pénètre dans les parties découpées (29, 29a, 61).

4. Roue tangente (4, 4a, 4b, 4c, 4d, 4e, 4f, 4g, 4h) selon la revendication 3, dans laquelle :
une partie en saillie (60, 60a) faisant saillie dans une direction axiale est prévue sur une surface latérale axiale de la partie de bride métallique (27, 27a, 27b, 27c) pour être adjacente à au moins l'une des parties découpées (29, 29a, 61).

5. Roue tangente (4, 4a, 4b, 4c, 4d, 4e, 4f, 4g, 4h) selon l'une quelconque des revendications 2 à 4, dans laquelle :
la partie concavo-convexe métallique (51, 51a) est prévue, de manière circonférentielle sur la surface circonférentielle externe de la partie annulaire métallique (26) ; et
la partie de la résine synthétique formant le noyau en résine (25, 25a, 25b, 25c, 25d, 25e, 25f, 25g) pénètre dans une partie concave configurant la partie concavo-convexe métallique (51, 51a).

6. Roue tangente (4, 4a, 4b, 4c, 4d, 4e, 4f, 4g, 4h) selon l'une quelconque des revendications 1 à 5, dans laquelle :
la partie concave annulaire (32, 32a, 32b) est prévue pour être enfoncée dans la direction axiale sur toute la circonférence au niveau d'une partie positionnée radialement à l'intérieur à partir d'un bord circonférentiel externe dans une surface latérale axiale du noyau en résine (25, 25a, 25b, 25c, 25d, 25e, 25f, 25g) ; et
la partie de la résine synthétique configurant l'élément de roue externe (16, 16a, 16b, 16c, 16d, 16e) pénètre dans la partie concave annulaire (32, 32a, 32b).

7. Roue tangente (4, 4a, 4b, 4c, 4d, 4e, 4f, 4g, 4h) selon l'une quelconque des revendications 1 à 6, dans laquelle :
la partie concavo-convexe en résine (33, 33a) est formée, de manière circonférentielle, sur une surface du noyau en résine (25, 25a, 25b, 25c, 25d, 25e, 25f, 25g) ; et
la partie de la résine synthétique configurant l'élément de roue externe (16, 16a, 16b, 16c, 16d, 16e) pénètre dans une partie concave (35, 35a) configurant la partie concavo-convexe en résine (33, 33a).

8. Roue tangente (4, 4a, 4b, 4c, 4d, 4e, 4f, 4g, 4h) selon la revendication 7, dans laquelle :
une partie concave annulaire (32, 32a, 32b) est prévue pour être enfoncée dans la direction axiale sur toute la circonférence au niveau d'une partie positionnée radialement à l'intérieur à partir d'un bord circonférentiel externe dans une surface latérale axiale du noyau en résine (25, 25a, 25b, 25c, 25d, 25e, 25f, 25g) ; et
la partie concavo-convexe en résine (33, 33a) est prévue sur une surface interne de la partie concave annulaire (32, 32a, 32b).

9. Roue tangente (4, 4a, 4b, 4c, 4d, 4e, 4f, 4g, 4h) selon l'une quelconque des revendications 1 à 8, dans laquelle :
au moins une partie de la surface circonférentielle externe du noyau en résine (25, 25a, 25b, 25c, 25d, 25e, 25f, 25g) dans la direction axiale sert de partie de surface cylindrique (40).

10. Roue tangente (4, 4a, 4b, 4c, 4d, 4e, 4f, 4g, 4h) selon l'une quelconque des revendications 1 à 9, dans laquelle :
au moins une partie recouverte par la résine synthétique formant l'élément de roue externe (16, 16a, 16b, 16c, 16d, 16e) dans une surface du noyau en résine (25, 25a, 25b, 25c, 25d, 25e, 25f, 25g) sert de minuscule surface concavo-convexe.

11. Engrenage de réduction à vis sans fin comprenant :
un boîtier (3) ;
un arbre de rotation supporté, en rotation, par rapport au boîtier ;
une roue tangente (4, 4a, 4b, 4c, 4d, 4e, 4f, 4g, 4h) comprenant une partie de dent de roue tangente (19, 19a) sur une surface circonférentielle externe et montée extérieurement et fixée sur l'arbre de rotation ; et
un arbre de vis sans fin (6) comprenant une partie de dent de vis sans fin (18) sur une partie intermédiaire axiale d'une surface circonférentielle externe, et supporté pour pouvoir tourner par rapport au boîtier (3), dans un état dans lequel la partie de dent de vis sans fin (18) est mise en prise avec la partie de dent de roue tangente (19, 19a), dans lequel :
la roue tangente (4, 4a, 4b, 4c, 4d, 4e, 4f, 4g, 4h) est la roue tangente selon l'une quelconque des revendications 1 à 10.

12. Engrenage de réduction à vis sans fin selon la revendication 11, dans lequel :
une plage axiale recouvrant radialement au moins une partie axiale d'une partie en mise en prise entre la partie de dent de roue tangente (19, 19a) et la partie de dent de vis sans fin (18) dans une surface circonférentielle externe d'un noyau en résine (25, 25a, 25b, 25c, 25d, 25e, 25f, 25g) configurant la roue tangente (4, 4a, 4b, 4c, 4d, 4e, 4f, 4g, 4h) sert de partie de surface cylindrique (40).

13. Engrenage de réduction à vis sans fin selon la revendication 12, dans lequel :
une plage axiale recouvrant radialement toute la partie de mise en prise dans la surface circonférentielle externe du noyau en résine (25, 25a, 25b, 25c, 25d, 25e, 25f, 25g) sert de partie de surface cylindrique (40).

14. Engrenage de réduction à vis sans fin selon la revendication 12 ou 13, dans lequel :
toute la surface circonférentielle externe du noyau en résine (25, 25a, 25b, 25c, 25d, 25e, 25f, 25g) sert de partie de surface cylindrique (40).
